# EUROPEAN PATENT SPECIFICATION

(11) **EP 4 133 650 B1**
(45) Date of publication and mention of the grant of the patent: **10.09.2025**
(21) Application number: 20895955.1
(22) Date of filing: 15.05.2020
(51) Int. Cl.: H04L 5/00, H04W 72/23

(54) **SYSTEM AND METHOD FOR MULTICAST TRANSMISSION**
SYSTEM UND VERFAHREN ZUR MEHRFACHSENDUNG
SYSTÈME ET PROCÉDÉ DE TRANSMISSION EN MULTIDIFFUSION

(43) Date of publication of application: 15.02.2023
(73) Proprietor: ZTE Corporation, Shenzhen, Guangdong 518057 (CN)
(72) Inventor: HAO, Peng, Shenzhen, Guangdong 518057 (CN); KOU, Shuaihua, Shenzhen, Guangdong 518057 (CN); LIU, Xing, Shenzhen, Guangdong 518057 (CN); SHI, Jing, Shenzhen, Guangdong 518057 (CN)
(74) Representative: Vossius & Partner Patentanwälte Rechtsanwälte mbB
(86) International application number: PCT/CN2020/090454
(87) International publication number: WO 2021/109462

(56) References cited:
- EP-A1- 3 565 343
- WO-A1-2019/084570
- WO-A1-2019/136205
- WO-A1-2020/146893
- WO-A2-2019/094781
- CN-A- 107 734 646
- US-A1- 2020 112 941
- FRAUNHOFER HHI ET AL: "Design of NR V2X Physical Layer Structures", vol. RAN WG1, no. Prague, CZ; 20190826 - 20190830, 16 August 2019 (2019-08-16), XP051765285, Retrieved from the Internet <URL:http://www.3gpp.org/ftp/tsg_ran/WG1_RL1/TSGR1_98/Docs/R1-1908677.zip> [retrieved on 20190816]
- CONVIDA WIRELESS: "On physical layer structure for NR V2X sidelink", vol. RAN WG1, no. Prague, CZ; 20190826 - 20190830, 17 August 2019 (2019-08-17), XP051766024, Retrieved from the Internet <URL:http://www.3gpp.org/ftp/tsg_ran/WG1_RL1/TSGR1_98/Docs/R1-1909419.zip> [retrieved on 20190817]
- INTERDIGITAL: "Retransmissions Aspects for UL Data-Data Intra-UE Prioritization", vol. RAN WG2, no. Xi'An, China; 20190408 - 20190412, 6 April 2019 (2019-04-06), XP051700898, Retrieved from the Internet <URL:http://www.3gpp.org/ftp/Meetings%5F3GPP%5FSYNC/RAN2/Docs/R2%2D1903555%2Ezip> [retrieved on 20190406]
- ERICSSON: "Feature lead summary for Scheduling of multiple DL/UL transport blocks for LTE-MTC", 3GPP TSG-RAN WG1 MEETING #97,R1-1907580, 17 May 2019 (2019-05-17), XP051739882
- ERICSSON: "Updated feature lead summary for Scheduling of multiple DL/UL transport blocks for LTE-MTC", 3GPP TSG-RAN WG1 MEETING #97,R1-1907617, 17 May 2019 (2019-05-17), XP051736966
- NOKIA ET AL.: "Scheduling of multiple DL/UL transport blocks", 3GPP TSG RAN WG1 MEETING #97,R1-1906703, 17 May 2019 (2019-05-17), XP051708739

## Description

### TECHNICAL FIELD

The disclosure relates generally to wireless communications and, more particularly, to systems and methods for multicast and unicast transmission.

### BACKGROUND

In wireless communication technology, multicast transmission is used to transmit the same data to more than one user equipment (UE) with the same interested service. For example, Multimedia Broadcast Multicast Service (MBMS) has been introduced in Long Term Evolution (LTE). Multicast transmission is provided in New Radio (NR), as well.

3GPP Draft R1-1908677, 3GPP Draft R1-1909419, EP 3 565 343 A1 and 3GPP Draft R2-1903555 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

In one embodiment, a method performed by a wireless communication device includes receiving, by a wireless communication device from a wireless communication node, a downlink control signal, determining, by the wireless communication device, to which of a plurality of resource sets the downlink control signal belongs, receiving, by the wireless communication device, a downlink data signal scheduled by the downlink control signal, and determining, by the wireless communication device based on the determined resource set, that the downlink data signal is one of: a new multicast transmission, a multicast retransmission, a new unicast transmission, and a unicast retransmission.

In another embodiment, a method performed by a wireless communication node includes transmitting, by a wireless communication node to a wireless communication device, a downlink control signal. The downlink control signal belongs to one of a plurality of resource sets. The method includes transmitting, by the wireless communication node to the wireless communication device, a downlink data signal scheduled by the downlink control signal. Based on the resource sets to which the downlink control signal belongs, the downlink data signal is one of: a new multicast transmission, a multicast retransmission, a new unicast transmission, and a unicast retransmission.

The above and other aspects and their implementations are described in greater detail in the drawings, the descriptions, and the claims.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 illustrates an example cellular communication network in which techniques and other aspects disclosed herein may be implemented, in accordance with an embodiment of the present disclosure.
FIG. 2 illustrates block diagrams of an example base station and a user equipment device, in accordance with some embodiments of the present disclosure.
FIG. 3 illustrates an example diagram of a configuration of a PDCCH monitoring occasion, in accordance with some embodiments of the present disclosure.
FIG. 4 illustrates an example diagram of a new transmission and retransmission, in accordance with some embodiments of the present disclosure.
FIG. 5 illustrates an example diagram of a new transmission and retransmission, in accordance with some embodiments of the present disclosure.
FIG. 6 illustrates an example diagram of a new transmission and retransmission, in accordance with some embodiments of the present disclosure.
FIG. 7 illustrates an example diagram of a new transmission and retransmission, in accordance with some embodiments of the present disclosure.
FIG. 8 illustrates an example of diagram a new transmission and retransmission, in accordance with some embodiments of the present disclosure.
FIG. 9 illustrates an example diagram of a new transmission and retransmission, in accordance with some embodiments of the present disclosure.
FIG. 10 illustrates an example diagram of a new transmission and retransmission, in accordance with some embodiments of the present disclosure.
FIG. 11 illustrates an example diagram of new transmissions and retransmissions, in accordance with some embodiments of the present disclosure.
FIG. 12 illustrates a block diagram of an example of configuration of PDCCH monitoring occasion of a search space, in accordance with some embodiments of the present disclosure.
FIG. 13 illustrates an example diagram of scheduled transmission for multicast data, in accordance with some embodiments of the present disclosure.
FIGS. 14A-14B illustrate example diagrams of time interval configuration in terms of slot, in accordance with some embodiments of the present disclosure.
FIG. 15 illustrates an example diagram of PDCCH monitoring occasion set configuration, in accordance with some embodiments of the present disclosure.
FIG. 16 illustrates a flowchart of a method for receiving a downlink control signal, in accordance with some embodiments of the present disclosure.
FIG. 17 illustrates a flowchart of a method for transmitting a downlink control signal, in accordance with some embodiments of the present disclosure.

### DETAILED DESCRIPTION OF EXAMPLE EMBODIMENTS

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise. The invention is defined by the appended claims.

### A. Network Environment and Computing Environment

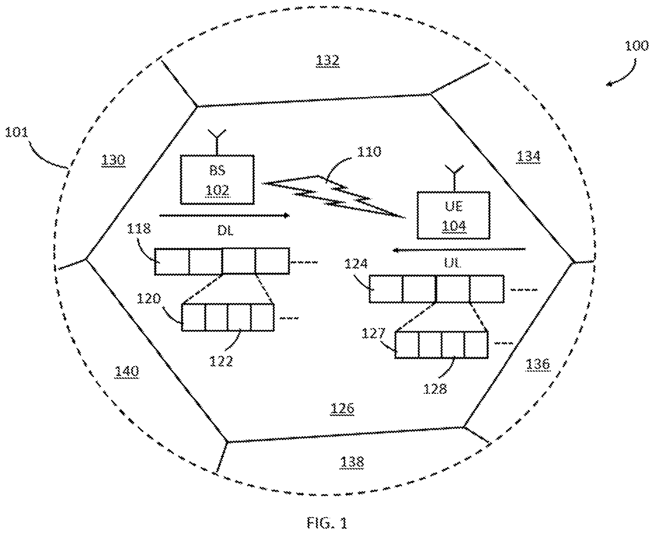

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102") and a user equipment device 104 (hereinafter "UE 104") that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

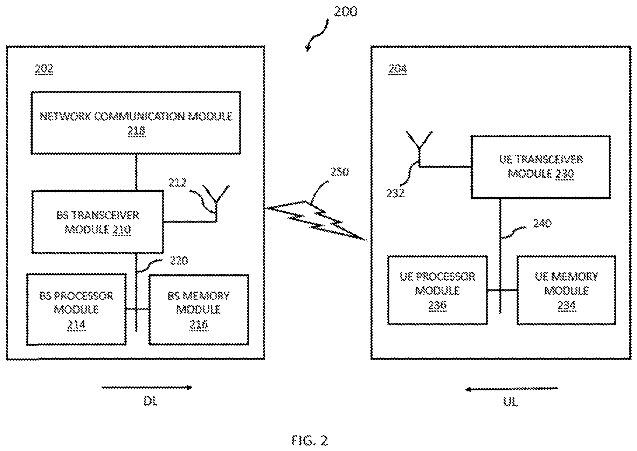

FIG. 2 illustrates a block diagram of an example wireless communication system 200 for transmitting and receiving wireless communication signals, e.g., OFDM/OFDMA signals, in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 can be coordinated in time such that the uplink receiver circuitry is coupled to the uplink antenna 232 for reception of transmissions over the wireless transmission link 250 at the same time that the downlink transmitter is coupled to the downlink antenna 212. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

### B. Multicast Transmission

In wireless communication technology, multicast transmission is used to transmit the same data to more than one user equipment (UE, e.g., UE 104, UE 204, terminal, a mobile device, a wireless communication device, a wireless communication node, etc.) with the same interested service. For example, Multimedia Broadcast Multicast Service (MBMS) has been introduced in Long Term Evolution (LTE). In New Radio (NR), multicast transmission can improve system efficiency and UE experience. In addition, multicast transmission may support many different services, such as V2X service, which can support greater reliability. This disclosure provides some methods for the multicast transmission in a wireless communication system.

In the wireless communication system, a control resource set (CORESET) includes one or more resource blocks (RBs) in the frequency domain and one or more orthogonal frequency division multiplexing (OFDM) symbols in the time domain. One or more physical downlink control channels (PDCCH) are transmitted in the CORESET. The configuration parameters of the CORESET are configured by a network (e.g., the network 100, the system 200, the BS 102, the BS 202, a gNB, an eNB, etc.) for the UE, including a CORESET index, a frequency domain resource, a CORESET duration, etc. One or more of the CORESETs may be configured for the UE for monitoring the PDCCH.

In the wireless communication system, one or more search spaces are configured by the network for the UE. The configuration parameters of the search space include a search space index, an associated CORESET index, a PDCCH monitoring periodicity and offset, a search space duration, a PDCCH monitoring pattern within a slot, a search space type, etc. In general, there are two types of search space: a UE-specific search space (USS) and a common search space (CSS). The search space type indicates the downlink control information (DCI) formats that the UE monitors. The search space is associated with the CORESET. The PDCCH monitoring periodicity and offset indicate the slots on which the UE needs to monitor the PDCCH. According to the search space configuration and the associated CORESET configuration, the UE is configured to monitor corresponding PDCCHs with DCI formats indicated by the search space type on the resources indicated by the CORESET in the slots indicated by the PDCCH monitoring periodicity and offset.

FIG. illustrates an example diagram of a configuration of a PDCCH monitoring occasion, in accordance with some embodiments of the present disclosure. Eight slots are illustrated overall (denoted by slot 0~7). The PDCCH monitoring periodicity is 4 slots and the offset is 0. The search space duration is 2 slots. Two PDCCH monitoring occasions (MOs) are configured (e.g., specified, enabled, identified, determined, selected, etc.) in a slot. Four MOs are configured within one PDCCH monitoring period. On each of the MOs, there is one resource configured by the CORESET for the UE to monitor PDCCH.

In the wireless communication system, one or more PDCCH candidates are configured in one search space. Each PDCCH candidate includes a PDCCH candidate index. The PDCCH includes one or more control-channel elements (CCEs). Each CCE has a CCE index.

In this disclosure, the configuration parameters, methods, etc., can be configured by the network via at least one of Radio Resource Control (RRC) signaling, a Medium Access Control Control Element (MAC CE), or Downlink Control Information (DCI).

In this disclosure, a PDCCH resource set includes one or more PDCCH resources. A PDCCH resource can be referred to as a PDCCH candidate, or a PDCCH.

In some embodiments, a wireless communication device (e.g., the UE) receives, from a wireless communication node, a downlink control signal. In some embodiments, the wireless communication device determines to which of a plurality of resource sets the downlink control signal belongs. In some embodiments, the wireless communication device receives a downlink data signal scheduled by the downlink control signal. In some embodiments, the wireless communication device determines, based on the determined resource set, that the downlink data signal is one of: a new multicast transmission, a multicast retransmission, a new unicast transmission, and a unicast retransmission.

In some embodiments, a wireless communication node (e.g., the network) transmits, to a wireless communication device, a downlink control signal. In some embodiments, the downlink control signal belongs to one of a plurality of resource sets. In some embodiments, the wireless communication node transmits, to the wireless communication device, a downlink data signal scheduled by the downlink control signal. In some embodiments, based on the resource sets to which the downlink control signal belongs, the downlink data signal is one of: a new multicast transmission, a multicast retransmission, a new unicast transmission, and a unicast retransmission.

In some embodiments, the downlink control signal includes a physical downlink control channel (PDCCH), and the downlink data signal includes a physical downlink shared channel (PDSCH).

In some embodiments, a first PDCCH resource set (e.g., one or more PDCCHs in the first PDCCH resource set) configured by the network is (e.g., only) used for scheduling a multicast transmission of physical downlink shared channels (PDSCH). The transmission of the multicast PDSCH includes (e.g., is, is included in, corresponds to, is associated with, etc.) at least one of a first transmission (e.g., a new transmission) or a retransmission. In some embodiments, the first PDCCH resource set may not be used for scheduling a unicast transmission of data. In some embodiments, the first PDCCH resource set can be identified (e.g., detected, received) by at least one UE.

In some embodiments, a first CORESET is configured by the network for a UE. A first search space associated with the first CORESET is configured by the network for the UE. In some embodiments, a first PDCCH resource set includes the PDCCHs corresponding to the first CORESET or the first search space. The PDCCH corresponding to (e.g., in) the first CORESET and the first search space may be configured to schedule the multicast PDSCH to the UE. In some embodiments, the PDCCH in the first CORESET and the first search space may not be used to schedule unicast PDSCH to the UE.

In some embodiments, a first dedicated signaling explicitly configures that the PDCCHs in the first CORESET and/or the first search space is used to schedule multicast PDSCH for the UE. The first dedicated signaling can be in the first CORESET configuration or in the first search space configuration.

In some embodiments, it is implicitly configured that the PDCCH in the first CORESET and/or the first search space is used to schedule multicast PDSCH for the UE. For example, a special radio network temporary identifier (RNTI) may be configured for cyclic redundancy check (CRC) scrambling for a DCI format that is configured to schedule a multicast transmission of PDSCH(s). If the special RNTI is configured for the PDCCH in the first CORESET or the first search space, it may imply that the PDCCH is used to schedule multicast PDSCH for the UE.

In some embodiments, the first CORESET and/or the first search space is configured by a signaling transmitted by means of broadcast (e.g., a signaling in master information block (MIB) or system information block (SIB)). In some embodiments, the first CORESET and/or the first search space is configured by a signaling transmitted by means of multicast (e.g., a signaling transmitted on a multicast control channel (MCCH), a multicast traffic channel (MTCH), a single cell multicast control channel (SC-MCCH), a single-cell multicast traffic channel (SC-MTCH), a signaling transmitted on MBMS Point to Multipoint Radio Bearer (MRB), or a Single Cell MRB (SC-MRB)). In some embodiments, the PDCCH corresponding to at least one of the first CORSET or the first search space is used to schedule multicast PDSCH for the UE.

In some embodiments, the first CORESET or the first search space is configured by a signaling that is broadcasted or multicasted by the wireless communication node. In some embodiments, the broadcasted signaling is included in at least one of: a master information block (MIB) or a system information block (SIB). In some embodiments, the multicasted signaling is included in at least one of: a multicast control channel (MCCH), a multicast traffic channel (MTCH), a single cell multicast control channel (SC-MCCH), a single-cell multicast traffic channel (SC-MTCH), a Multimedia Broadcast Multicast Service (MBMS) Point to Multipoint Radio Bearer (MRB), or a Single Cell MRB (SC-MRB).

In some embodiments, the PDCCH in the first CORESET and/or the first search space is used to schedule a new transmission for the multicast PDSCH. In some embodiments, when the UE receives a downlink (DL) transmission scheduled by the PDCCH in the first CORESET and/or the first search space, the UE determines (e.g., detects, considers that, etc.) that the DL transmission includes a new transmission regardless of the value of the new data indicator (NDI) in the PDCCH. If a UE receives one or more transport blocks (TBs) scheduled by the PDCCH in the first CORESET and/or the first search space, the UE may determine that the TBs include a new transmission. If a UE receives one or more transport blocks (TBs) scheduled by the PDCCH in the first CORESET and/or the first search space, the UE may determine that the NDI of the TBs is toggled regardless of the value of the NDIs in the PDCCH.

In some embodiments, the wireless communication device determines the downlink control signal belongs to a first resource set and determines that the downlink data signal is a new multicast transmission.

In some embodiments, the PDCCH in the first PDCCH resource set configured by a first dedicated signaling for scheduling multicast PDSCH is used to schedule a new transmission for the multicast PDSCH. In some embodiments, when the UE receives a PDSCH scheduled by the PDCCH in the first PDCCH resource set configured by a first dedicated signaling for scheduling multicast PDSCH, the UE determines that the PDSCH includes a new transmission regardless of the value of the NDI in the PDCCH. If a UE receives one or more TBs scheduled by the PDCCH in the first PDCCH resource set configured by a first dedicated signaling for scheduling multicast data, the UE may determine that the TBs include a new transmission. If a UE receives one or more TBs scheduled by the PDCCH in the first PDCCH resource set configured by a first dedicated signaling, the UE may determine that the NDI of the TBs is toggled regardless of the value of the NDI of the TBs.

In some embodiments, a PDCCH with a DCI format with a CRC scrambled by a special RNTI is used to schedule a new transmission for the multicast PDSCH. When a UE receives a PDSCH scheduled by the PDCCH with a DCI format with the CRC scrambled by the special RNTI, the UE determines that the PDSCH includes a new transmission regardless of the value of the NDI in the PDCCH. If a UE receives one or more TBs scheduled by the PDCCH with a DCI format with CRC scrambling by the special RNTI, the UE may determine that the TBs include a new transmission. In some embodiments, when a UE receives a PDSCH scheduled by the PDCCH for the MAC entity's special RNTI, the UE determines that the PDSCH includes a new transmission regardless of the value of the NDI in the PDCCH. If a UE receives one or more TBs scheduled by the PDCCH for the MAC entity's special RNTI, the UE may determine that the TBs include a new transmission. The UE may determine that the NDI in the PDCCH is toggled regardless of the value of the NDI of the TBs. In some embodiments, the special RNTI may include MBMS RNTI (M-RNTI), or Group RNTI (G-RNTI), or Single Cell RNTI (SC-RNTI), or System Information RNTI (SI-RNTI).

In some embodiments, the wireless communication device determines that the downlink control signal is scrambled with a first radio network temporary identifier (RNTI), and determining, by the wireless communication device, that the downlink data signal is a new multicast transmission. In some embodiments, the wireless communication node scrambles the downlink control signal with a first radio network temporary identifier (RNTI), wherein the downlink data signal is a new multicast transmission.

In some embodiments, the PDCCH transmitted in the CORSET and/or search space configured by a signaling transmitted by means of a broadcast (e.g. a signaling in MIB or SIB) is used to schedule a new transmission for the multicast PDSCH. In some embodiments, when a UE receives a PDSCH scheduled by the PDCCH in the CORSET and/or search space configured by a signaling transmitted by means of the broadcast, the UE determines that the PDSCH includes a new transmission regardless of the value of the NDI in the PDCCH. If a UE receives one or more TBs scheduled by the PDCCH in the CORSET and/or search space configured by a signaling transmitted by means of the broadcast, the UE may determine that the TBs include a new transmission. The UE may determine that the NDI of the TBs is toggled regardless of the value of the NDI of the TBs.

In some embodiments, the PDCCH transmitted in the CORSET and/or search space configured by a signaling transmitted by means of a multicast (e.g. a signaling transmitted on MCCH, or on MTCH, or on SC-MCCH, or on SC-MTCH, or a signaling transmitted on MRB, or on SC-MRB) is used to schedule a new transmission for the multicast data. When a UE receives a PDSCH scheduled by the PDCCH in the CORSET and/or search space configured by a signaling transmitted by means of the multicast, the UE may determine that the PDSCH includes a new transmission regardless of the value of the NDI in the PDCCH. If a UE receives one or more TBs scheduled by the PDCCH in the CORSET and/or search space configured by a signaling transmitted by means of the multicast, the UE may determine that the TBs include a new transmission. The UE may determine that the NDI of the TBs are toggled regardless of the value of the NDI of the TBs.

In some embodiments, a first PDCCH resource set (e.g., one or more PDCCH in the first PDCCH resource set) configured by the network is (e.g., only) used for scheduling a new multicast transmission of PDSCH. In some embodiments, there is no NDI field in the PDCCH transmitted in the first PDCCH resource set. In some embodiments, the NDI field in the PDCCH in the first PDCCH resource set is reserved. In some embodiments, the NDI field in the PDCCH in the first PDCCH resource set is set to be a fixed value. For example, the NDI is always set to be 1 or 0. When a UE receives a PDSCH scheduled by the PDCCH in the first PDCCH resource set, the UE may determine that the corresponding PDSCH includes new transmission regardless of the value of the NDI in the PDCCH scheduling the PDSCH. If a UE receives one or more TBs scheduled by the PDCCH in the first PDCCH resource set, the UE may determine that each of TBs includes a new transmission regardless of the value of the NDI of the DL transmission. If a UE receives one or more transport blocks (TBs) scheduled by the PDCCH in the first PDCCH resource set, the UE may determine that the NDI of the TBs is toggled regardless of the value of the NDI of the TBs. In some embodiments, the NDI in the PDCCH in the first PDCCH resource set is (e.g, always) set to a value so that the UE determines that the scheduled PDSCH includes a new transmission. For example, the NDI in the PDCCH in the first PDCCH resource set is always set to 1 so that the UE determines the scheduled PDSCH is a new transmission. If a UE receives a PDSCH scheduled by the PDCCH in the first PDCCH resource set, the UE may determine that the PDSCH includes a new transmission (e.g., only) when the NDI is 1. In some embodiments, a new data indicator (NDI) in the downlink control signal is set as a fixed value.

PDSCH can include DL transmission of DL traffic channel or DL data.

In some embodiments, a second PDCCH resource set (e.g., one or more PDCCH in the second PDCCH resource set) configured by the network is (e.g., only) used for scheduling retransmission. In some embodiments, the UE determines that the transmission scheduled by the PDCCH in the second PDCCH resource set includes a transmission other than the first transmission (or a transmission other than new transmission). In some embodiments, the method includes determining, by the wireless communication device, that the downlink control signal belongs to a second resource set, and determining, by the wireless communication device, that the downlink data signal is a multicast retransmission.

In some embodiments, there is no NDI field in the PDCCH in the second PDCCH resource set. In some embodiments, the NDI field in the PDCCH in the second PDCCH resource set is reserved. In some embodiments, the NDI field in the PDCCH in the second PDCCH resource set is set to be a fixed value. For example, the NDI is always set to be 1 or 0. If a UE receives one or more TBs scheduled by the PDCCH in the second PDCCH resource set, the UE may determine that each of the TBs includes a retransmission regardless of the value of the NDI of the DL transmission. If a UE receives one or more transport blocks (TBs) scheduled by the PDCCH in the second PDCCH resource set, the UE may determine that the NDI of the TBs are not toggled regardless of the value of the NDI of the TBs. In some embodiments, the NDI in the PDCCH in the second PDCCH resource set is (e.g., always) set to a value so that the UE determines that the scheduled PDSCH is a retransmission. For example, the NDI in the PDCCH in the second PDCCH resource set is always set to 0 so that the UE determines that the scheduled PDSCH is a retransmission. If a UE receives a PDSCH scheduled by the PDCCH in the second PDCCH resource set, the PDSCH is considered to be a retransmission (e.g., only) when the NDI is 0. In some embodiments, a new data indicator (NDI) in the downlink control signal is set to be a fixed value.

In some embodiments, the second PDCCH resource set can be identified (e.g., detected, or received) by at least one UE. In some embodiments, the second PDCCH resource set can be identified (e.g., detected, or received) by only one UE. In some embodiments, the retransmission scheduled by the PDCCH in the second PDCCH resource set is for multicast PDSCH or unicast PDSCH. If the retransmission scheduled by a PDCCH in the second PDCCH resource set is for multicast PDSCH, the PDCCH and the retransmission can be identified by at least one UE. If the retransmission scheduled by a PDCCH in the second PDCCH resource set is for unicast PDSCH, the PDCCH and the retransmission can be identified by only one UE.

In some embodiments, at least one of a second CORESET and a second search space associated with the second CORESET is configured by the network for the UE. In some embodiments, the second PDCCH resource set includes the PDCCH corresponding to at least one of the second CORESET and the second search space. In some embodiments, the PDCCH corresponding to (e.g., in, transmitted in) at least one of the second CORESET and the second search space is configured to schedule multicast retransmission of PDSCH for UE. In some embodiments, the PDCCH corresponding to at least one of the second CORESET and the second search space is configured to be able to schedule retransmission for multicast PDSCH and schedule unicast PDSCH for UE.

In some embodiments, the second search space is USS. In some embodiments, the second search space is CSS. In some embodiments, the DCI format of PDCCH corresponding to at least one of the second CORESET and the second search space is scrambled by Cell RNTI (C-RNTI).

In some embodiments, a second dedicated signaling explicitly configures that the PDCCH corresponding to at least one of the second CORESET and the second search space is used to schedule retransmission for multicast PDSCH for UE. The second dedicated signaling can be in the second CORESET configuration or in the second search space configuration. In some embodiments, the second CORESET and the first CORESET are the same CORESET.

In some embodiments, a DL transmission for a multicast data block is scheduled by the PDCCH corresponding to the first CORESET or the first search space for a UE. The UE may not decode the DL transmission correctly. A negative acknowledgement (NACK) may be reported by the UE. In some embodiments, a NACK may not reported by the UE. In some embodiments, a DL retransmission for the same multicast data block is scheduled by the PDCCH in the second CORESET for the UE. In some embodiments, the DL transmission and the DL retransmission may have a same Hybrid automatic repeat request (HARQ) process (e.g. a same HARQ process number). In some embodiments, the value of the NDI of the DL retransmission is not toggled compared to the value of the NDI of the DL transmission. For example, the NDI of the DL retransmission is 1 and the NDI of the DL transmission is 1. In another example, the NDI of the DL retransmission is 0 and the NDI of the DL transmission is 0. In some embodiments, the multicast data block is a transport block.

In some embodiments, the UE receives a DL transmission scheduled by PDCCH corresponding to the second CORESET. The UE may determine that the DL transmission is a retransmission for multicast data block if the NDI is not toggled compared to the value of the NDI of a previous received DL transmission with the same HARQ process scheduled by PDCCH corresponding to the first CORESET or the second CORESET. The same multicast data block is transmitted in the DL transmission and the previous DL transmission. In some embodiments, a DL transmission scheduled by PDCCH corresponding to the second CORESET is received. The UE may determine that the DL transmission is a new transmission for unicast data block if the NDI is toggled compared to the value of the NDI of a previous DL transmission with the same HARQ process scheduled by PDCCH corresponding to the first CORESET or the second CORESET.

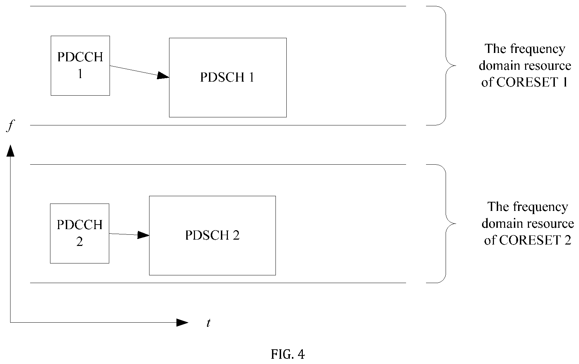

FIGS. 4-7 illustrate example diagrams of new transmission and retransmission, in accordance with some embodiments of the present disclosure. In each of the example diagrams of FIGS. 4-7, two CORESET denoted by CORESET 1 and CORESET 2 are configured. In each of the example diagrams of FIGS. 4-7, the resource of the two CORESET can overlap in the frequency domain.

FIG. illustrates an example diagram of new transmission and retransmission, in accordance with some embodiments of the present disclosure. The PDCCH in CORESET 1 may be configured to schedule new transmission for multicast PDSCH for UE. PDCCH 1 in CORESET 1 may schedule PDSCH 1 for UE. Therefore, the UE determines that PDSCH 1 carries multicast data and includes a new transmission. The PDCCH in CORESET 2 may be configured to schedule retransmission for multicast PDSCH for UE. PDCCH 2 in CORESET 2 may schedule PDSCH 2 for UE. Therefore, the UE may determine that PDSCH 2 carries multicast data and includes a retransmission.

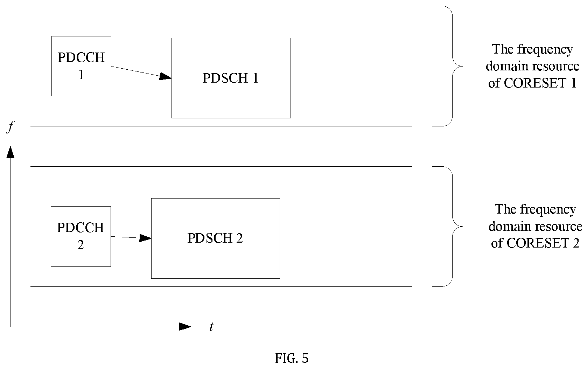

FIG. 5 illustrates an example diagram of a new transmission and retransmission, in accordance with some embodiments of the present disclosure. The PDCCH in CORESET 1 may be configured to schedule new transmission for unicast PDSCH for UE. PDCCH 1 in CORESET 1 may schedule PDSCH 1 for UE. Therefore, the UE determines that PDSCH 1 carries unicast data and includes a new transmission. The PDCCH in CORESET 2 may be configured to schedule retransmission for unicast PDSCH for UE. PDCCH 2 in CORESET 2 may schedule PDSCH 2 for UE. Therefore, the UE may determine that PDSCH 2 carries unicast data and includes a retransmission.

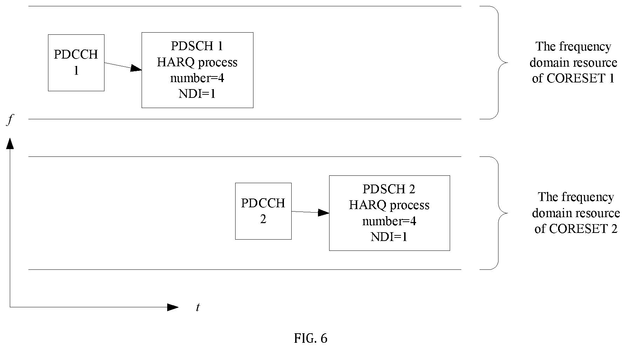

FIG. 6 illustrates an example diagram of a new transmission and retransmission, in accordance with some embodiments of the present disclosure. The PDCCH in CORESET 1 is configured to schedule multicast PDSCH. The PDCCH in CORSET 2 is configured to schedule multicast PDSCH and unicast PDSCH. PDCCH 1 in CORESET 1 schedules PDSCH 1 and PDCCH 2 in CORESET 2 schedules PDSCH 2. Therefore, the UE may determine that PDSCH 1 carries multicast data and, in some embodiments, includes a new transmission. PDSCH 2 and PDSCH 1 have the same HARQ process (i.e. HARQ process number=4) and the NDI of PDSCH 2 is not toggled compared to PDSCH 1. The UE may determine that PDSCH 2 includes a retransmission and carries multicast data. The same TBs are transmitted by PDSCH 1 and PDSCH 2. This can improve the efficiency of retransmission especially when there are few UEs who need retransmission.

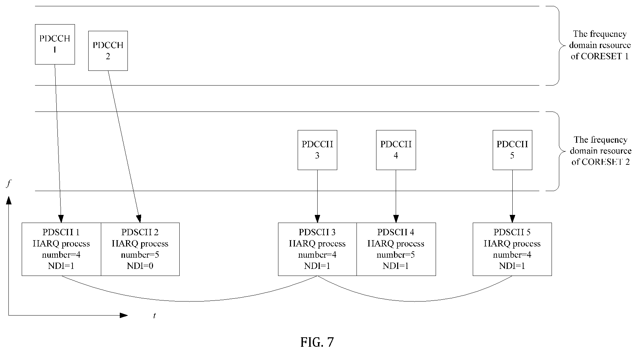

FIG. 7 illustrates an example diagram of a new transmission and retransmission, in accordance with some embodiments of the present disclosure. The PDCCH corresponding to CORESET 1 is configured to schedule transmission for multicast data block. The PDCCH corresponding to CORESET 2 is configured to schedule retransmission for multicast data block and unicast data block. PDCCH 1 and PDCCH 2 are transmitted on the resources of CORESET 1 to schedule PDSCH 1 and PDSCH 2, respectively. PDCCH 1 and 2 may be transmitted on the different PDCCH monitoring occasions. Therefore, the UE may determine that PDSCH 1 and PDSCH 2 include new transmissions for multicast data block regardless of the value of NDI of PDSCH 1 and PDSCH 2. The UE may determine that each TB carried by PDSCH 1 and PDSCH 2 includes a new transmission for multicast data block. In some embodiments, the UE may determine that the NDI of PDSCH 1 and PDSCH 2 is toggled regardless of the value of the NDI.

PDCCH 3, PDCCH 4, and PDCCH 5 are transmitted on the resources of CORESET 2 to schedule PDSCH 3, PDSCH 4, and PDSCH 5, respectively. PDCCH 3, PDCCH 4, and PDCCH 5 may be transmitted on the different PDCCH monitoring occasions. PDSCH 1 and PDSCH 3 have the same HARQ process (e.g. HARQ process number=4). The UE may determine that PDSCH 1 is the previous transmission of PDSCH 3. The value of the NDI of PDSCH 1 is 1 and the value of the NDI of PDSCH 3 is 1 as well. For PDSCH 3, the NDI is not toggled compared to the value of the NDI of PDSCH 1. The UE may determine that PDSCH 3 is a retransmission for multicast data block. The UE may determine that the TB carried by PDSCH 3 is a retransmission for multicast data block. PDSCH 1 and PDSCH 3 carry the same TB for multicast data block. PDSCH 3 and PDSCH 5 have the same HARQ process (e.g. HARQ process number=4). The UE may determine that PDSCH 3 is the previous transmission of PDSCH 5. For PDSCH 5, the NDI is not toggled compared to the value of the NDI of PDSCH 3. The UE may determine that PDSCH 5 is a retransmission for multicast data block. The UE may determine that the TB carried by PDSCH 5 is a retransmission for multicast data block. PDSCH 3 and PDSCH 5 carry the same TB for multicast data block.

PDSCH 2 and PDSCH 4 have the same HARQ process (e.g. HARQ process number=5). PDSCH 2 is the previous transmission of PDSCH 4. The value of the NDI of PDSCH 2 is 0 and the value of the NDI of PDSCH 4 is 1. For PDSCH 4, the NDI is toggled compared to the value of the NDI of PDSCH 2. The UE may determine that PDSCH 4 is a new transmission for unicast data block. The UE may determine that the TB carried by PDSCH 4 is a new transmission for unicast data block.

In some embodiments, the PDCCH corresponding to the second CORESET is configured to (e.g., only) schedule retransmission for multicast data block for UE. The UE may determine that a received DL transmission scheduled by PDCCH corresponding to the second CORESET includes a retransmission for multicast data block. In some embodiments, a DL transmission scheduled by PDCCH corresponding to the second CORESET is received. The UE may determine that the NDI of the received DL transmission is not toggled regardless of the value of the NDI of the received DL transmission. In some embodiments, the same multicast data block is transmitted in the DL transmission scheduled by the PDCCH corresponding to the second CORESET and a previous received DL transmission with the same HARQ process. In some embodiments, there is no NDI field in the PDCCH corresponding to the second CORESET. In some eombodiments, the NDI field in the PDCCH corresponding to the second CORESET is reserved. In some embodiments, the NDI field in the PDCCH corresponding to the second CORESET is set to be a fixed value. For example, the NDI is always set to be 1 or 0. The PDCCH corresponding to the second CORESET and its scheduled retransmission can be identified (e.g., detected) by at least one UE.

For example, the PDCCH corresponding to CORESET 2 in FIG. can be configured to only schedule retransmission for multicast data block. The UE may determine that PDSCH 3, PDSCH 4, and PDSCH 5 include retransmission for multicast data block regardless of the value of NDI of PDSCH 3, PDSCH 4, and PDSCH 5. The UE may determine that each TB carried by PDSCH 3, PDSCH 4, and PDSCH includes a retransmission for multicast data block. The same TBs are carried by PDSCH 1, PDSCH 3 and PDSCH 5 since they have the same HARQ process (e.g. HARQ process number=4). The same TBs are carried by PDSCH 2 and PDSCH 4 since they have the same HARQ process (e.g. HARQ process number=5).

In some embodiments, a DL transmission for a multicast data block is scheduled by the PDCCH corresponding to the first search space or the first CORESET for a UE. The UE does not decode it correctly. A negative acknowledgement (NACK) is reported by the UE. In some embodiments, a NACK is not reported by the UE. A DL retransmission for the same multicast data block is scheduled by the PDCCH corresponding to the second search space for the UE. In some embodiments, the DL transmission and the DL retransmission may have the same HARQ process (e.g. the same HARQ process number). In some embodiments, the value of the NDI of the DL retransmission is not toggled compared to the value of the NDI of the DL transmission. In some embodiments, the multicast data block is a transport block.

The UE may receive a DL transmission scheduled by PDCCH corresponding to the second search space. The UE may determine that the DL transmission is a retransmission for multicast data block if the NDI is not toggled compared to the value of the NDI of a previous received DL transmission with the same HARQ process scheduled by PDCCH corresponding to the first search space or the second search space. The same multicast data block is transmitted in the DL transmission and the previous DL transmission. In some embodiments, a DL transmission scheduled by PDCCH corresponding to the second search space is received. The UE may determine that the DL transmission is a new transmission for unicast data block if the NDI is toggled compared to the value of the NDI of a previous DL transmission with the same HARQ process scheduled by PDCCH corresponding to the first search space or the second search space.

In some embodiments, the wireless communication device determines that the downlink data signal is a multicast retransmission when a new data indicator (NDI) in the downlink control signal is not toggled, compared to a first previous transmission that is a multicast transmission, determines that the downlink data signal is a new unicast transmission when the NDI in the downlink control signal is toggled, compared to the second previous transmission that is either a multicast transmission or a unicast transmission, and determines that the downlink data signal is a unicast retransmission when the NDI in the downlink control signal is not toggled, compared to a third previous transmission that is a unicast transmission.

In some embodiments, the wireless communication the downlink data signal as a multicast retransmission when not toggling a new data indicator (NDI) in the downlink control signal, compared to a first previous transmission that is a multicast transmission, transmits the downlink data signal as a new unicast transmission when toggling NDI in the downlink control signal is, compared to the second previous transmission that is either a multicast transmission or a unicast transmission, and transmits the downlink data signal as a unicast retransmission when not toggling the NDI in the downlink control signal, compared to a third previous transmission that is a unicast transmission.

FIG. illustrates an example diagram of a new transmission and retransmission, in accordance with some embodiments of the present disclosure. Two search space denoted by Search space 1 and Search space 2 are configured. The PDCCH in Search space 1 is configured to schedule new transmission for multicast PDSCH for UE. PDCCH 1 in Search space 1 schedules PDSCH 1 for UE. Therefore, the UE may determine that PDSCH 1 (e.g., always) carries multicast data and includes a new transmission. The PDCCH in Search space 2 is configured to schedule retransmission for multicast PDSCH for UE. PDCCH 2 in Search space 2 schedules PDSCH 2 for UE. Therefore, the UE may determine that PDSCH 2 (e.g., always) carries multicast data and includes a retransmission.

FIG. illustrates an example diagram of a new transmission and retransmission, in accordance with some embodiments of the present disclosure. Two search space denoted by Search space 1 and Search space 2 are configured. The PDCCH in Search space 1 is configured to schedule new transmission for unicast PDSCH for UE. PDCCH 1 in Search space 1 schedules PDSCH 1 for UE. Therefore, The UE may determine that PDSCH 1 (e.g., always) carries unicast data and includes a new transmission. The PDCCH in Search space 2 is configured to schedule retransmission for unicast PDSCH for UE. PDCCH 2 in Search space 2 schedules PDSCH 2 for UE. Therefore, the UE may determine that PDSCH 2 (e.g., always) carries unicast data and includes a retransmission.

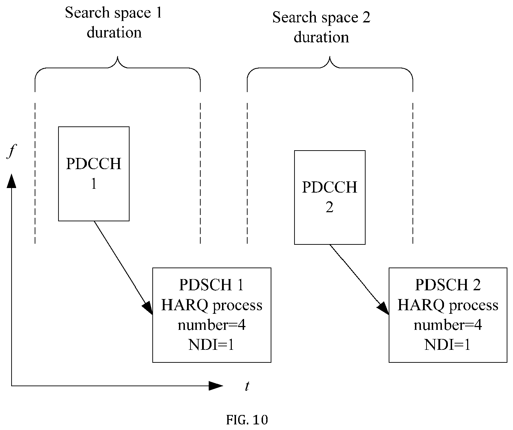

FIG. 10 illustrates an example diagram of a new transmission and retransmission, in accordance with some embodiments of the present disclosure. Two search space denoted by Search space 1 and Search space 2 are configured. The PDCCH in Search space 1 is configured to schedule multicast PDSCH. The PDCCH in Search space 2 is configured to schedule unicast PDSCH. PDCCH 1 in Search space 1 schedules PDSCH 1 and PDCCH 2 in Search space 2 schedules PDSCH 2. Therefore, The UE may determine that PDSCH 1 (e.g., always) carries multicast data and includes a new transmission. PDSCH 2 and PDSCH 1 have the same HARQ process (i.e. HARQ process number=4) and the NDI of PDSCH 2 is not toggled compared to PDSCH 1. The UE may determine that PDSCH 2 includes a retransmission and carries multicast data. The same TBs are transmitted by PDSCH 1 and PDSCH 2. This can improve the efficiency of retransmission especially when there are few UEs who need retransmission.

FIG. illustrates an example diagram of new transmissions and retransmissions, in accordance with some embodiments of the present disclosure. Two search space are configured denoted as search space 1 and search space 2. The PDCCH corresponding to search space 1 is configured to schedule new transmission for multicast data block. The PDCCH corresponding to search space 2 is configured to schedule transmission for multicast data block and unicast data block. PDCCH 1 and PDCCH 2 are transmitted on the PDCCH monitoring occasions of search space 1 to schedule PDSCH 1 and PDSCH 2, respectively. PDCCH 1 and 2 may be transmitted on the different PDCCH monitoring occasions. Therefore, the UE may determine that PDSCH 1 and PDSCH 2 include new transmissions for multicast data block regardless of the value of NDI of PDSCH 1 and PDSCH 2. The UE may determine that each TB carried by PDSCH 1 and PDSCH 2 includes a new transmission for multicast data block. In some embodiments, The UE may determine that the NDI of PDSCH 1 and PDSCH 2 is toggled regardless of the value of the NDI.

PDCCH 3, PDCCH 4, and PDCCH 5 are transmitted on the PDCCH monitoring occasions of search space 2 to schedule PDSCH 3, PDSCH 4, and PDSCH 5, respectively. It should be noted that PDCCH 3, PDCCH 4, and PDCCH 5 may be transmitted on the different PDCCH monitoring occasions. PDSCH 1 and PDSCH 3 have the same HARQ process (e.g. HARQ process number=4). PDSCH 1 is the previous transmission of PDSCH 3. The value of the NDI of PDSCH 1 is 1 and the value of the NDI of PDSCH 3 is 1. For PDSCH 3, the NDI is not toggled compared to the value of the NDI of PDSCH 1. The UE may determine that PDSCH 3 is a retransmission for multicast data block. The UE may determine that the TB carried by PDSCH 3 is a retransmission for multicast data block. PDSCH 1 and PDSCH 3 carry the same TB for multicast data block. PDSCH 3 and PDSCH 5 have the same HARQ process (e.g. HARQ process number=4). PDSCH 3 is the previous transmission of PDSCH 5. For PDSCH 5, the NDI is not toggled compared to the value of the NDI of PDSCH 3. The UE may determine that PDSCH 5 is a retransmission for multicast data block. The UE may determine that the TB carried by PDSCH 5 is a retransmission for multicast data block. PDSCH 3 and PDSCH 5 carry the same TB for multicast data block.

PDSCH 2 and PDSCH 4 have the same HARQ process (e.g. HARQ process number=5). PDSCH 2 is the previous transmission of PDSCH 4. The value of the NDI of PDSCH 2 is 0 and the value of the NDI of PDSCH 4 is 1. For PDSCH 4, the NDI is toggled compared to the value of the NDI of PDSCH 2. The UE may determine that PDSCH 4 is a new transmission for unicast data block. The UE may determine that the TB carried by PDSCH 4 is a new transmission for unicast data block.

In some embodiments, the PDCCH corresponding to the second search space is configured to (e.g., only) schedule retransmission for multicast data block for UE. The UE may determine that a received DL transmission scheduled by PDCCH corresponding to the second search space includes a retransmission for multicast data block. In some embodiments, a DL transmission scheduled by PDCCH corresponding to the second search space is received. The UE may determine that the NDI of the received DL transmission is not toggled regardless of the value of the NDI of the received DL transmission. In some embodiments, the same multicast data block is transmitted in the DL transmission scheduled by the PDCCH corresponding to the second search space and a previous received DL transmission with the same HARQ process.

For example, the PDCCH corresponding to search space 2 in FIG. may be configured to only schedule retransmission for multicast data block. The UE may determine that PDSCH 3, PDSCH 4, and PDSCH 5 include a retransmission for multicast data block regardless of the value of NDI of PDSCH 3, PDSCH 4, and PDSCH 5. The UE may determine that each TB carried by PDSCH 3, PDSCH 4, and PDSCH 5 includes a retransmission for multicast data block. The same TBs are carried by PDSCH 1, PDSCH 3 and PDSCH 5 since they have the same HARQ process (e.g. HARQ process number=4). The same TBs are carried by PDSCH 2 and PDSCH 4 since they have the same HARQ process (e.g. HARQ process number=5).

In some embodiments, at least one of a third CORESET and a third search space associated with the third CORESET is configured by the network for the UE. In some embodiments, the PDCCH corresponding to at least one of the third CORESET and the third search space is configured to be able to schedule new transmission and retransmission for multicast data (e.g., PDSCH) for UE.

In some embodiments, the third PDCCH resource set includes all the PDCCH corresponding to at least one of the third CORESET or the third search space. In some embodiments, the first PDCCH resource set is a sub-set of the third PDCCH resource set. In some embodiments, (e.g., only) some of the PDCCH in the third PDCCH resource set belong to the first PDCCH resource set, which are, in some embodiments, used (e.g., only) for scheduling new multicast transmission of data. In some embodiments, the second PDCCH resource is a sub-set of the third PDCCH resource set. In some embodiments, some of the PDCCH in the third PDCCH resource set belong to the second PDCCH resource set, which are, in some embodiments, used (e.g., only) for scheduling multicast retransmission of data.

In some embodiments, a first part of the PDCCH monitoring occasions of the third search space are configured to schedule new transmission for multicast data block for UE. The PDCCH on the first part of the PDCCH monitoring occasions belong to the first PDCCH resource set. The PDCCH transmitted on the first part of the PDCCH monitoring occasions of the third search space may be used to (e.g., only) schedule a new transmission for the multicast data. When a UE receives a DL transmission scheduled by the PDCCH transmitted on the first part of the PDCCH monitoring occasions of the third search space, the UE may determine that the DL transmission includes a new transmission regardless of the value of the NDI of the DL transmission. If a UE receives one or more TBs scheduled by the PDCCH transmitted on the first part of the PDCCH monitoring occasions of the third search space, the UE may determine that the TBs include a new transmission regardless of the value of the NDI of the TBs. In some embodiments, the UE may determine that the NDI of the TB scheduled by the PDCCH transmitted on the first part of the PDCCH monitoring occasions of the third search space is toggled regardless of the value of the NDI.

In some embodiments, a second part of the PDCCH monitoring occasions of the third search space are configured to schedule retransmission for multicast data for the UE. The PDCCH on the second part of the PDCCH monitoring occasions belong to the second PDCCH resource set. The PDCCH transmitted on the second part of the PDCCH monitoring occasions of the third search space is used to (e.g., only) schedule a retransmission for the multicast data. When a UE receives a DL transmission scheduled by the PDCCH transmitted on the second part of the PDCCH monitoring occasions of the third search space, the UE may determine that the DL transmission includes a retransmission regardless of the value of the NDI of the DL transmission. If a UE receives one or more TBs scheduled by the PDCCH transmitted on the second part of the PDCCH monitoring occasions of the third search space, the UE may determine that the TBs include a retransmission regardless of the value of the NDI of the TBs.

FIG. 1 illustrates a block diagram of an example of configuration of PDCCH monitoring occasion of a search space, in accordance with some embodiments of the present disclosure. Eight PDCCH monitoring occasions are denoted as MO 0~7, respectively. MO 0, MO 1, MO 4, and MO 5 belong to the first PDCCH resource set and are configured only for PDCCH scheduling new transmission for multicast data. MO 2 MO 3, MO 6, and MO 7 belong to the second PDCCH resource set and are configured only for PDCCH scheduling retransmission for multicast data.

When a UE receives a DL transmission scheduled by a PDCCH transmitted on the MO 0, MO 1, MO 4, or MO 5, the UE may determine that the DL transmission includes a new transmission. The UE may determine that a TB scheduled by a PDCCH transmitted on the MO 0, MO 1, MO 4, or MO5 includes a new transmission. In some embodiments, the UE may determine that the NDI of a TB scheduled by a PDCCH transmitted on the MO 0, MO 1, MO 4, or MO5 is toggled regardless of the value of NDI.

When a UE receives a DL transmission scheduled by a PDCCH transmitted on the MO 2, MO 3, MO 6, or MO 7, the UE may determine that the DL transmission includes a retransmission. The UE may determine that a TB scheduled by a PDCCH transmitted on the MO 2, MO 3, MO 6, or MO 7 includes a retransmission. In some embodiments, the UE may determine that the NDI of a TB scheduled by a PDCCH transmitted on the MO 2, MO 3, MO 6, or MO 7 is not toggled regardless of the value of NDI.

In some embodiments, a first pattern is configured by the network for the third search space for UE. The first pattern indicates the purpose of the PDCCH monitoring occasions for every N PDCCH monitoring occasions from the first PDCCH monitoring occasions, where N is the total number of the PDCCH monitoring occasions in the first pattern. It is indicated which of the PDCCH monitoring occasions belong to the first part of PDCCH monitoring occasions and which of the PDCCH monitoring occasions belong to the second part of PDCCH monitoring occasions. According to the first pattern, PDCCH transmitted on some of the PDCCH monitoring occasions of the third search space (a first part of PDCCH monitoring occasions) are used to schedule new transmission for multicast data block and PDCCH transmitted on some of the PDCCH monitoring occasions of the third search space (a second part of PDCCH monitoring occasions) are used to schedule retransmission for multicast data block. In some embodiments, the first PDCCH monitoring occasion is the first PDCCH monitoring occasions starting from the first slot of System Frame Number (SFN) 0. In some embodiments, the first PDCCH monitoring occasion is indicated by the network.

In some embodiments, a pattern periodicity is configured. In some embodiments, a pattern periodicity may be one or more PDCCH occasions. In some embodiments, a pattern periodicity may be one or more OFDM symbols, or sub-slots, or slots, or subframes, or frames. In some embodiments, a bitmap is used for the indication. The length of the bitmap is the total number of PDCCH monitoring occasions in the pattern period. The order of bitmap is such that the first PDCCH monitoring occasion to the last PDCCH monitoring occasion in the pattern period are mapped from Most Significant Bit (MSB) to (Least Significant Bit) LSB. The PDCCH monitoring occasion belongs to the first part of PDCCH monitoring occasion if the corresponding bit value in the bitmap is 1, the PDCCH monitoring occasion belongs to the second part of PDCCH monitoring occasion otherwise. For example, in some embodiments, MO 0 in FIG. 1 is the first PDCCH monitoring occasions. There are total 4 PDCCH monitoring occasions in the pattern. The pattern periodicity is 4 MOs. Bitmap '1100' is to indicate that the first two MOs in the pattern belongs to the first part of PDCCH monitoring occasions and the last two MOs in the pattern belongs to the second part of PDCCH monitoring occasions. Therefore, MO 0, MO 1, MO 4, and MO 5 are configured (e.g., only) for PDCCH transmission for scheduling new transmission for multicast data. MO 2, MO 3, MO 6, and MO 7 are configured (e.g., only) for PDCCH transmission for scheduling retransmission for multicast data.

In some embodiments, a first part of the PDCCH candidates of the third search space are configured for PDCCH transmission scheduling (e.g., only) new transmission for multicast data block for UE. The PDCCH with the first part of the PDCCH candidate indexes may be used to (e.g., only) schedule a new transmission for the multicast data. In some embodiments, the PDCCH with the first part of the PDCCH candidate indexes belong to the first PDCCH resource set. When a UE receives a DL transmission scheduled by the PDCCH with the first part of the PDCCH candidate indexes, the UE may determine that the DL transmission includes a new transmission regardless of the value of the NDI of the DL transmission. If a UE receives one or more TBs scheduled by the PDCCH with the first part of the PDCCH candidate indexes, the UE may determine that the TBs include a new transmission regardless of the value of the NDI of the TBs. In some embodiments, the UE may determine that the NDI of the TB scheduled by the PDCCH with the first part of the PDCCH candidate indexes is toggled regardless of the value of the NDI.

In some embodiments, a second part of the PDCCH candidates of the third search space are configured for PDCCH transmission scheduling (e.g., only) retransmission for multicast data block for the UE. The PDCCH with the second part of the PDCCH candidate indexes may be used to (e.g., only) schedule a retransmission for the multicast data. In some embodiments, the PDCCH with the second part of the PDCCH candidate indexes belong to the second PDCCH resource set. When a UE receives a DL transmission scheduled by the PDCCH with the second part of the PDCCH candidate indexes, the UE may determine that the DL transmission includes a retransmission regardless of the value of the NDI of the DL transmission. If a UE receives one or more TBs scheduled by the PDCCH with the second part of the PDCCH candidate indexes, the UE may determine that the TBs include a retransmission regardless of the value of the NDI of the TBs. In some embodiments, the UE may determine that the NDI of the TB scheduled by the PDCCH with the second part of the PDCCH candidate indexes is not toggled regardless of the value of the NDI.

In some embodiments, a first threshold is configured for PDCCH candidate index. In some embodiments, the PDCCH with the candidate indexes smaller than (or, smaller than or equal to) the first threshold belongs to one of the part of PDCCH candidate, e.g. the first part of the PDCCH candidate or the second part of the PDCCH candidate. In some embodiments, the PDCCH with the candidate indexes larger than or equal to (or, larger than) the first threshold belongs to one of the part of PDCCH candidate, e.g. the second part of the PDCCH candidate or the first part of the PDCCH candidate. For example, there are overall eight PDCCH candidates denoted as PDCCH candidate 0~7. The first threshold may configured to be 4. In some embodiments, PDCCH candidate 0~3, whose index is smaller than 4, belong to the first part of the PDCCH candidates. PDCCH candidate 4~7, whose index is larger than or equal to 4, belong to the second part of the PDCCH candidates.

In some embodiments, a first PDCCH candidate range is configured for PDCCH candidate index. In some embodiments, the PDCCH with candidate within the first PDCCH candidate range belongs to the first part of PDCCH candidate. In some embodiments, a second PDCCH candidate range is configured for PDCCH candidate index. In some embodiments, the PDCCH with candidate within the second PDCCH candidate range belongs to the first part of PDCCH candidate. For example, there are overall eight PDCCH candidates denoted as PDCCH candidate 0~7. In some embodiments, the first PDCCH candidate range is the PDCCH candidate index larger than or equal to 0 and smaller than 2, and the second PDCCH candidate range is the PDCCH candidate index larger than or equal to 2 and smaller than 4. In some embodiments, PDCCH candidate 0~1, whose index is within the first PDCCH candidate range, belong to the first part of the PDCCH candidates, and PDCCH candidate 2~3, whose index is within the second PDCCH candidate range, belong to the second part of the PDCCH candidates.

In some embodiments, a second threshold is configured for CCE index. In some embodiments, the PDCCH, whose first CCE indexes smaller than (or, smaller than or equal to) the second threshold, belongs to one of the part of PDCCH candidate, e.g. the first part of the PDCCH candidate or the second part of the PDCCH candidate. In some embodiments, the PDCCH, whose first CCE indexes larger than or equal to (or, larger than) the second threshold, belongs to one of the part of PDCCH candidate, e.g. the second part of the PDCCH candidate or the first part of the PDCCH candidate. For example, there are overall eight PDCCH candidates denoted as PDCCH candidate 0~7. In some embodiments, the first CCE index of PDCCH candidate 0~7 are 0, 4, 8, 12, 16, 20, 24, and 28, respectively. The second threshold may be configured to be 24. PDCCH candidate 0~5, whose first CCE index is smaller than 24, in some embodiments, belong to the first part of the PDCCH candidates. PDCCH candidate 6~7, whose first CCE index is larger than or equal to 24, in some embodiments, belong to the second part of the PDCCH candidates.

In some embodiments, the first resource set is associated with a first control resource set (CORESET) or a first search space, or the first resource set includes a first part of PDCCH candidates in a third CORESET or a third search space, wherein the first part of PDCCH candidates correspond to at least one of: (i) one or more of a plurality of PDCCH monitoring occasions (MOs) in the third CORESET or the third search space; (ii) one or more PDCCH in the third CORESET or the third search space with candidate index larger or smaller than a threshold or (iii) one or more PDCCH candidates in the third CORESET or the third search space with control channel element (CCE) index larger or smaller than a threshold.

In some embodiments, a first CCE range is configured for CCE index. The PDCCH with its first CCE index within the first CCE range belongs to the first part of PDCCH candidate. In some embodiments, a second CCE range is configured for CCE index. In some embodiments, the PDCCH with its first CCE index within the second CCE range belongs to the second part of PDCCH candidate. For example, there are eight PDCCH candidates denoted as PDCCH candidate 0~7. In some embodiments, the first CCE index of PDCCH candidate 0~7 are 0, 4, 8, 12, 16, 20, 24, and 28, respectively. In some embodiments, the first CCE range is the CCE index larger than or equal to 0 and smaller than 8, and the second CCE range is the CCE index larger than or equal to 16 and smaller than 24. PDCCH candidate 0~1, whose first CCE index is within the first CCE range, in some embodiments, belong to the first part of the PDCCH candidates. PDCCH candidate 4~5, whose first CCE index is within the second CCE range, in some embodiments, belong to the second part of the PDCCH candidates.

In some embodiments, the second resource set is associated with a second CORESET or a second search space, or the second resource set includes a second part of PDCCH candidates in a third CORESET or a third search space wherein the second part of PDCCH candidates correspond to at least one of: (i) one or more of a plurality of PDCCH MOs in the third CORESET or the third search space; (ii) one or more PDCCH candidates in the third CORESET or the third search space with candidate index smaller or larger than a threshold, or (iii) one or more PDCCH candidates in the third CORESET or the third search space with CCE index smaller or larger than a threshold.

In some embodiments, a fourth PDCCH resource set configured by the network is used for scheduling either transmission for unicast data and retransmission for multicast data. A unicast transmission of data can be scheduled by the PDCCH in the fourth PDCCH resource set. A transmission other than the first transmission for multicast data can be scheduled by the PDCCH in the fourth PDCCH resource set. In some embodiments, for the multicast retransmission of data, the first transmission of the multicast data is scheduled by the PDCCH in the first PDCCH resource set. The first transmission can be identified (e.g., detected, or received) by at least one UE. The PDCCH in the first PDCCH resource set that schedules the new multicast transmission of data can be identified by at least one UE. In some embodiments, the multicast retransmission of data can be identified by only one UE. In some embodiments, the fourth PDCCH resource set can be identified by only one UE. The PDCCHs (e.g., all of the PDCCHs) in the fourth PDCCH resource set can be identified by only one UE. In some embodiments, the first transmission and the multicast retransmission of data have the same HARQ process (i.e. HARQ process number). In some embodiments, the downlink control signal and the downlink data signal can only be identified by the wireless communication device.

In some embodiments, at least one of a first CORESET and a first search space associated with the first CORESET is configured by the network for a UE. A fourth PDCCH resource set includes the PDCCH corresponding to at least one of the fourth CORESET or the fourth search space. The PDCCH corresponding to at least one of the fourth CORESET or the first search space is configured to schedule multicast retransmission of data and unicast transmission of data.

FIG. 2 illustrates an example diagram of scheduled transmission for multicast data, in accordance with some embodiments of the present disclosure. There are three PDCCH resource sets configured for UE 1 and UE 2. PDCCH resource set 1 is configured for UE 1 and UE 2. Therefore, PDCCH resource set 1 can be identified by UE 1 and UE 2. According to the embodiments, PDCCH resource set 1 corresponds to the first PDCCH resource set in the embodiments. PDCCH resource set 2A is configured for UE 1. Therefore, PDCCH resource set 2A can be identified by UE 1. PDCCH resource set 2B is configured for UE 2. Therefore, PDCCH resource set 2B can be identified by UE 2. According to the embodiments, PDCCH resource set 2A and PDCCH resource set 2B corresponds to the fourth PDCCH resource set in the embodiments. PDCCH 1 transmitted in PDCCH resource set 1 schedules PDSCH 1 carrying multicast data for UE 1 and UE 2. PDSCH 1 is the first transmission for multicast data for UE 1 and UE 2. PDCCH 2 transmitted in PDCCH resource set 2A schedules PDSCH 2 carrying multicast data for UE 1. PDCCH 3 transmitted in PDCCH resource set 2B schedules PDSCH 3 carrying multicast data for UE 2. PDSCH 2 and PDSCH 3 have the same HARQ process number with PDSCH 1, e.g., HARQ process number=4. Both of PDSCH 2 and PDSCH 3 are the retransmission of PDSCH 1 for multicast data. They carry the same TB with PDSCH 1. PDSCH 1 can be received by UE 1 and UE2 while PDSCH 2 can be received by only UE 1 and PDSCH 3 can only be received by UE 2. The multicast data can be retransmitted by means of unicast method.

In some embodiments, a HARQ process set (e.g. one or more HARQ processes in the HARQ process set) configured by the network is (e.g. only) used for scheduling a multicast transmission of PDSCH. In some embodiments, the HARQ process set may not be used for scheduling a unicast transmission of data. When a UE receives a PDSCH with a HARQ process number in the HARQ process set, the UE may determine that the PDSCH includes multicast transmission. For example, a HARQ process set includes HARQ process number 0~3 and are configured to be used for scheduling a multicast transmission of PDSCH. When a UE receives a PDSCH with a HARQ process number 1, which belongs to the HARQ process set, the UE may determine that the PDSCH includes multicast transmission. In some embodiments, the wireless communication device determines a HARQ number of the downlink data signal belongs to the HARQ process set and determines that the downlink data signal is a multicast transmission.

In some embodiments, a HARQ process set (e.g. one or more HARQ process in the HARQ process set) configured by the network is (e.g. only) used for scheduling a new multicast transmission of PDSCH. When a UE receives a PDSCH with a HARQ process number in the HARQ process set, the UE may determine that the PDSCH includes new transmission regardless of the value of the NDI of the PDSCH. If a UE receives one or more TBs with a HARQ process number in the HARQ process set, the UE may determine that the NDI of the TBs is toggled regardless of the value of the NDI of the TBs. In some embodiments, the wireless communication device determines a HARQ number of the downlink data signal belongs to the HARQ process set and determines that the downlink data signal is a new multicast transmission.

In some embodiments, a DCI format set (e.g. one or more DCI formats in the DCI format set) configured by the network is (e.g. only) used for scheduling a multicast transmission of PDSCH. In some embodiments, the DCI format set may not be used for scheduling a unicast transmission of data. When a UE receives a PDSCH scheduled by a PDCCH with a DCI format in the DCI format set, the UE may determine that the PDSCH includes multicast transmission. For example, a DCI format set includes DCI format 1 and are configured to be used for scheduling a multicast transmission of PDSCH. When a UE receives a PDSCH scheduled by a PDCCH with a DCI format 1, which belongs to the DCI format set, the UE may determine that the PDSCH includes multicast transmission. In some embodiments, the wireless communication device determines the downlink control signal belongs to the DCI format set and determines that the downlink data signal is a multicast transmission.

In some embodiments, a DCI format set (e.g. one or more DCI formats in the DCI format set) configured by the network is (e.g. only) used for scheduling a new multicast transmission of PDSCH. When a UE receives a PDSCH scheduled by a PDCCH with a DCI format in the DCI format set, the UE may determine that the PDSCH includes new transmission regardless of the value of the NDI of the PDSCH. If a UE receives one or more TBs scheduled by a PDCCH with a DCI format in the DCI format set, the UE may determine that the NDI of the TBs is toggled regardless of the value of the NDI of the TBs. In some embodiments, the wireless communication device determines the downlink control signal belongs to the DCI format set and determines that the downlink data signal is a new multicast transmission.

In some embodiments, a time interval is configured by the network for the UE. In some embodiments, a time interval is corresponding to a certain PDCCH or a certain PDSCH. In some embodiments, a time interval is used to transmit the PDCCH for only scheduling data retransmission and the previous data transmission is scheduled by a certain PDCCH, where the time interval is corresponding to the certain PDCCH. In other words, a certain PDCCH schedules a data transmission and the PDCCH for scheduling the data retransmission can only be transmitted within the corresponding time interval. If a UE receives a certain PDCCH for scheduling data transmission, the UE is expected to receive the PDCCH for scheduling the data retransmission only within the corresponding time interval.

In some embodiments, a time interval is used to transmit the PDCCH for only scheduling data retransmission for a certain PDSCH transmission, where the time interval is corresponding to the certain PDSCH. In other words, the PDCCH for scheduling the data retransmission for a certain PDSCH can only be transmitted within the corresponding time interval. If a UE receives a certain PDSCH, the UE is expected to receive the PDCCH for scheduling the data retransmission only within the corresponding time interval.

In some embodiments, the certain PDCCH means the PDCCH transmitted on a certain slot or on a certain PDCCH monitoring occasion of a certain slot. In some embodiments, the certain PDSCH means the PDSCH transmitted on a certain slot or on a certain sub-slot. In some embodiments, the data transmission is used for multicast data transmission. In some embodiments, the data transmission may be PDSCH.

In some embodiments, a time interval is one or more slots. In some embodiments, the time interval is one or more OFDM symbols. In some embodiments, the time interval is one or more subframes. In some embodiments, the time interval is one or more frames. In some embodiments, the time interval is one or more milliseconds.

In some embodiments, a time interval duration and a time offset are configured to indicate a time interval. The time interval duration is used to indicate the length of the time interval. The time offset is used to indicate the location of the time interval or the start of the time interval. In some embodiments, the time offset is the offset between the slot for PDCCH transmission for scheduling the previous transmission and the first slot of the time interval. In some embodiments, the time offset is the offset between the slot for the previous transmission and the first slot of the time interval. In some embodiments, the time offset can be configured in terms of OFDM symbol, slot, subframe, frame, or millisecond.

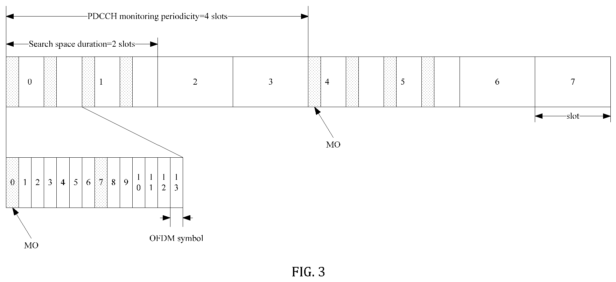

FIG. 3A-B illustrates an example diagram of time interval configuration in terms of slot, in accordance with some embodiments of the present disclosure. Ten slots are illustrated (denoted by slot 0~9, respectively). PDCCH 1 transmitted on slot 0 schedules PDSCH 1 transmitted on slot 1. The configured time offset is 6 slots and the configured time interval duration is 3 slots. In FIG. 3A, the time offset is the offset between the slot for PDCCH transmission for scheduling the previous transmission and the first slot of the time interval. Therefore, the first slot of the time interval is slot 6 and the time interval includes three slots, e.g., slot 6~8. Therefore, the PDCCH for scheduling retransmission for PDSCH 1 can (e.g., only) be transmitted on slot 6, or slot 7, or slot 8. The UE may be expected to receive the PDCCH for scheduling the retransmission for PDSCH 1 (e.g., only) on slot 6, slot 7, or slot 8.

In FIG. 3B, the time offset is the offset between the slot for the previous transmission and the first slot of the time interval. The PDSCH 1 is transmitted on slot 1. Therefore, the first slot of the time interval is slot 7 and the time interval includes three slots, e.g., slot 7~9. Therefore, the PDCCH for scheduling retransmission for PDSCH 1 can (e.g., only) be transmitted on slot 7, or slot 8, or slot 9. The UE may be expected to receive the PDCCH for scheduling the retransmission for PDSCH 1 (e.g., only) on slot 7, slot 8, or slot 9.

In some embodiments, a set of PDCCH monitoring occasions are configured by the network for the UE, e.g., a PDCCH monitoring occasions set is configured by the network for the UE. In some embodiments, a set of PDCCH monitoring occasions are corresponding to a certain PDCCH or a certain PDSCH. In some embodiments, a set of PDCCH monitoring occasions are used for PDCCH transmission for scheduling data retransmission and the previous data transmission is scheduled by a certain PDCCH, where the set of PDCCH monitoring occasions are corresponding to the certain PDCCH. In other words, a certain PDCCH schedules a data transmission and the PDCCH for scheduling the data retransmission can only be transmitted on the corresponding set of PDCCH monitoring occasions. If a UE receives a certain PDCCH for scheduling data transmission, the UE is expected to receive the PDCCH for scheduling the data retransmission on the corresponding set of PDCCH monitoring occasions.

In some embodiments, a set of PDCCH monitoring occasions are used for PDCCH transmission for only scheduling data retransmission for a certain PDSCH transmission, where the set of PDCCH monitoring occasions are corresponding to the certain PDSCH. In other words, the PDCCH for scheduling the data retransmission for a certain PDSCH can only be transmitted on the corresponding set of PDCCH monitoring occasions. If a UE receives a certain PDSCH, the UE is expected to receive the PDCCH for scheduling the data retransmission on the corresponding set of PDCCH monitoring occasions.

In some embodiments, a set of PDCCH monitoring occasions is one or more PDCCH monitoring occasions. In some embodiments, a set duration and a set offset are configured to indicate a set of PDCCH monitoring occasions. In some embodiments, the set duration is used to indicate the total number of PDCCH monitoring occasions in the set. In some embodiments, the set offset is the offset between the PDCCH monitoring occasion for PDCCH transmission for scheduling the previous transmission and the first PDCCH monitoring occasion in the set. In some embodiments, the set offset is the offset between the slot for PDCCH transmission for scheduling the previous transmission and the slot of the first PDCCH monitoring occasion in the set. In some embodiments, the set offset is the offset between the slot for the previous transmission and the slot of the first PDCCH monitoring occasion in the set. In some embodiments, the time offset can be configured in terms of OFDM symbol, slot, subframe, frame, millisecond, or PDCCH monitoring occasion.

FIG. 5 illustrates an example diagram of PDCCH monitoring occasion set configuration, in accordance with some embodiments of the present disclosure. Eight PDCCH monitoring occasions are illustrated (denoted by MO 0~7, respectively). PDCCH 1 on MO 0 schedules PDSCH 1. The configured set offset is 4 MOs and the configured set duration is 4 MOs. The set offset is the offset between the PDCCH monitoring occasion for PDCCH transmission for scheduling the previous transmission and the first PDCCH monitoring occasion in the set. Therefore, the first PDCCH monitoring occasion of the PDCCH monitoring occasion set is MO 4 and the set includes 4 MOs, i.e. MO 4~7. Therefore, the PDCCH for scheduling retransmission for PDSCH 1 can (e.g., only) be transmitted on MO 4~7. The UE is expected to receive the PDCCH for scheduling the retransmission for PDSCH 1 (e.g., only) on MO 4~7.

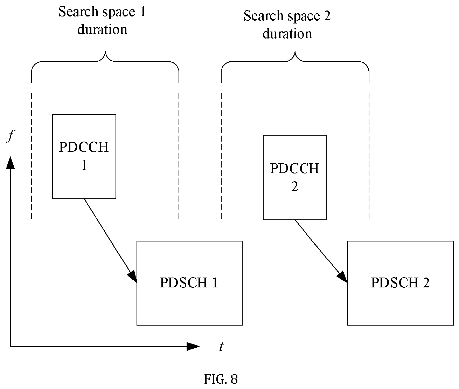

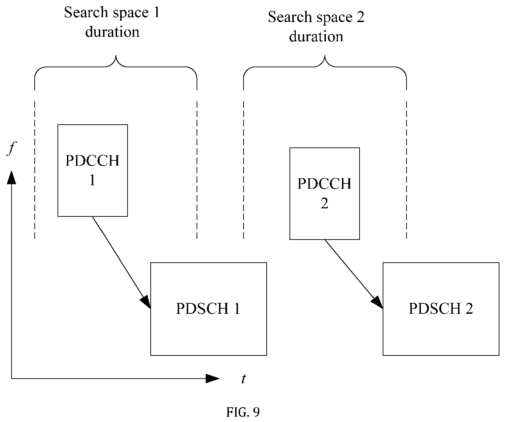

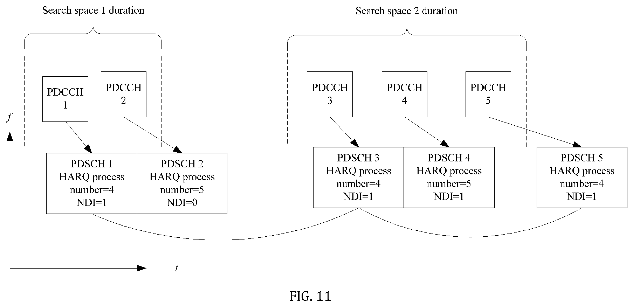

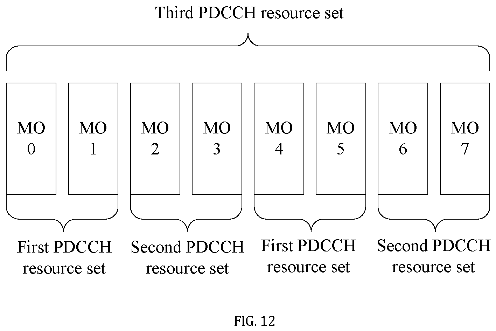

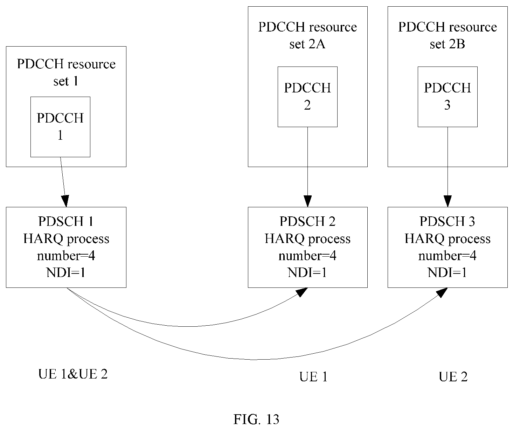

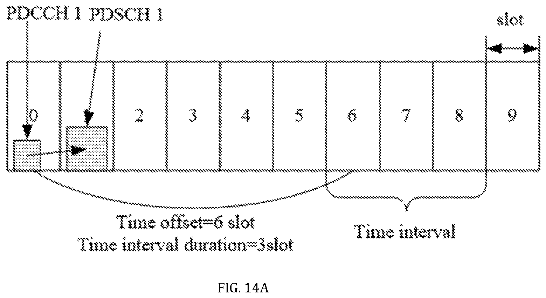

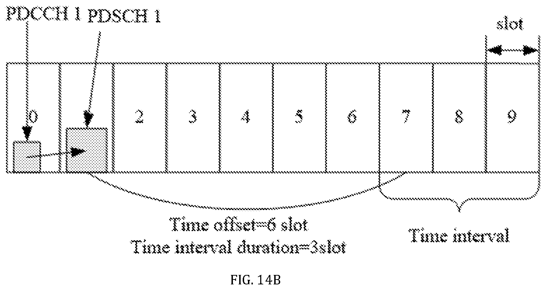

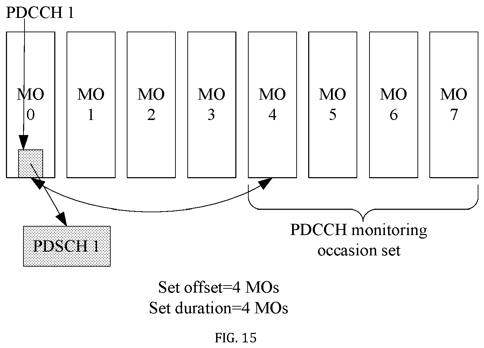

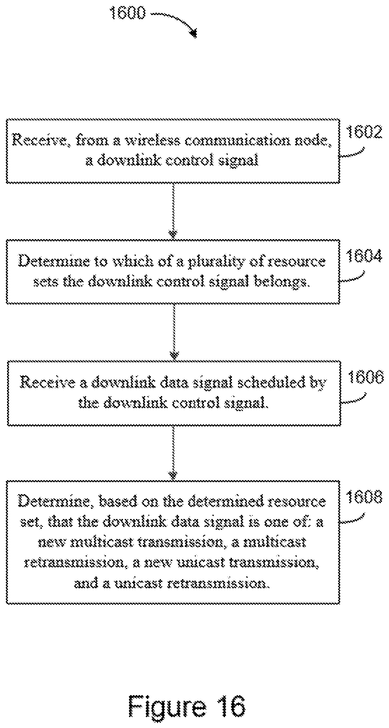

FIG. 16 illustrates a flowchart diagram illustrating a method 1600 for receiving downlink control signals, in accordance with some embodiments of the present disclosure. Referring to FIGS. 1-15, the method 1600 can be performed by a wireless communication device (e.g., a UE), in some embodiments. Additional, fewer, or different operations may be performed in the method 1600 depending on the embodiment.

A wireless communication device receives, from a wireless communication node, a downlink control signal (1602). The wireless communication device determines to which of a plurality of resource sets the downlink control signal belongs (1604). The wireless communication device receives a downlink data signal scheduled by the downlink control signal (1606). The wireless communication device determines, based on the determined resource set, that the downlink data signal is one of: a new multicast transmission, a multicast retransmission, a new unicast transmission, and a unicast retransmission (1608).

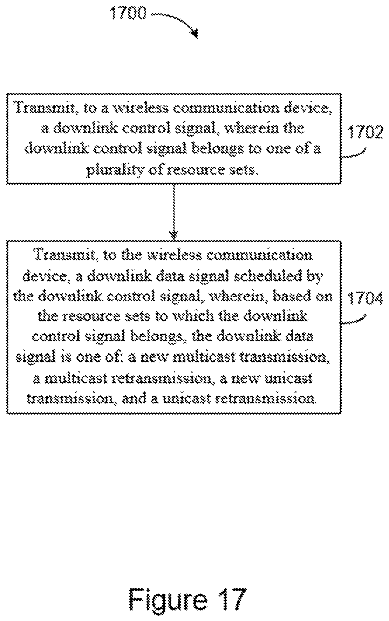

FIG. 17 illustrates a flowchart diagram illustrating a method 1700 for receiving downlink control signals, in accordance with some embodiments of the present disclosure. Referring to FIGS. 1-15, the method 1700 can be performed by a wireless communication node (e.g., a network), in some embodiments. Additional, fewer, or different operations may be performed in the method 1700 depending on the embodiment.

A wireless communication node transmits, to a wireless communication device, a downlink control signal (1702). The downlink control signal belongs to one of a plurality of resource sets. The wireless communication node transmits, to the wireless communication device, a downlink data signal scheduled by the downlink control signal (1704). Based on the resource sets to which the downlink control signal belongs, the downlink data signal is one of: a new multicast transmission, a multicast retransmission, a new unicast transmission, and a unicast retransmission.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method, comprising:
receiving (1602), by a wireless communication device from a wireless communication node, a downlink control signal;
determining (1604), by the wireless communication device in response to receiving the downlink control signal, a resource set of a plurality of resource sets, to which the downlink control signal belongs, wherein each of the plurality of resource sets is associated with a respective control resource set, CORESET;
receiving (1606), by the wireless communication device, a downlink data signal scheduled by the downlink control signal; and
determining (1608), by the wireless communication device based on the determined resource set, that the downlink data signal is one of: a new first multicast transmission, a multicast retransmission, a new first unicast transmission, and a unicast retransmission.

2. The wireless communication method of claim 1, wherein the downlink control signal includes a physical downlink control channel, PDCCH, and the downlink data signal includes a physical downlink shared channel, PDSCH.

3. The wireless communication method of claim 1, further comprising:
determining, by the wireless communication device, that the downlink control signal belongs to a first resource set; and
determining, by the wireless communication device, that the downlink data signal is a new multicast transmission.

4. The wireless communication method of claim 3, wherein:
a new data indicator, NDI, in the downlink control signal is set as a fixed value; or
the first resource set is associated with a first CORESET or a first search space, or
the first resource set includes a first part of physical downlink control channel, PDCCH, candidates in a third CORESET or a third search space, wherein the first part of PDCCH candidates corresponds to at least one of: i) one or more of a plurality of PDCCH monitoring occasions, MOs, in the third CORESET or the third search space; ii) one or more PDCCH candidates in the third CORESET or the third search space with candidate index larger or smaller than a threshold or iii) one or more PDCCH candidates in the third CORESET or the third search space with control channel element, CCE, index larger or smaller than a threshold; or
the first CORESET or the first search space is configured by a signaling that is broadcasted or multicasted by the wireless communication node.

5. The wireless communication method of claim 4, wherein:
the broadcasted signaling is included in at least one of: a master information block, MIB, or a system information block, SIB; or
the multicasted signaling is included in at least one of: a multicast control channel, MCCH, a multicast traffic channel, MTCH, a single cell multicast control channel, SC-MCCH, a single-cell multicast traffic channel, SC-MTCH, a Multimedia Broadcast Multicast Service, MBMS, Point to Multipoint Radio Bearer, MRB, or a Single Cell MRB, SC-MRB.

6. The wireless communication method of claim 1, further comprising:
determining, by the wireless communication device, that the downlink control signal is scrambled with a first radio network temporary identifier, RNTI; and
determining, by the wireless communication device, that the downlink data signal is a new multicast transmission;
or
determining, by the wireless communication device, that the downlink control signal belongs to a second resource set; and
determining, by the wireless communication device, that the downlink data signal is a multicast retransmission.

7. The wireless communication method of claim 6, wherein:
a new data indicator, NDI, in the downlink control signal is set to be a fixed value; or
the second resource set is associated with a second CORESET or a second search space; or
the second resource set includes a second part of physical downlink control channel, PDCCH, candidates in a third CORESET or a third search space wherein the second part of PDCCH candidates corresponds to at least one of: i) one or more of a plurality of PDCCH monitoring occasions, MOs, in the third CORESET or the third search space; ii) one or more PDCCH candidates in the third CORESET or the third search space with candidate index smaller or larger than a threshold, or iii) one or more PDCCH candidates in the third CORESET or the third search space with CCE index smaller or larger than a threshold.

8. The wireless communication method of claim 1, further comprising:
determining, by the wireless communication device, that the downlink control signal belongs to a fourth resource set, wherein the fourth resource set is associated with a fourth CORESETor a fourth search space.

9. The wireless communication method of claim 8, further comprising:
determining, by the wireless communication device, that the downlink data signal is a multicast retransmission when a new data indicator, NDI, in the downlink control signal is not toggled, compared to a first previous transmission that is a multicast transmission;
determining, by the wireless communication device, that the downlink data signal is a new unicast transmission when the NDI in the downlink control signal is toggled, compared to the second previous transmission that is either a multicast transmission or a unicast transmission; and
determining, by the wireless communication device, that the downlink data signal is a unicast retransmission when the NDI in the downlink control signal is not toggled, compared to a third previous transmission that is a unicast transmission.

10. A wireless communication device, comprising:
at least one processor configured to:
receive, via a receiver from a wireless communication node, a downlink control signal;
determine, in response to receiving the downlink control signal, a resource set of a plurality of resource sets, to which the downlink control signal belongs, wherein each of the plurality of resource sets is associated with a respective control resource set, CORESET;
receive, via the receiver, a downlink data signal scheduled by the downlink control signal; and
determine, based on the determined resource set, that the downlink data signal is one of: a new first multicast transmission, a multicast retransmission, a new first unicast transmission, and a unicast retransmission.

11. A wireless communication method, comprising:
transmitting (1702), by a wireless communication node to a wireless communication device, a downlink control signal, wherein the downlink control signal belongs to a resource set of a plurality of resource sets, wherein each of the plurality of resource sets is associated with a respective control resource set, CORESET; and
transmitting (1704), by the wireless communication node to the wireless communication device, a downlink data signal scheduled by the downlink control signal, wherein, based on the resource set to which the downlink control signal belongs, the downlink data signal is one of: a new first multicast transmission, a multicast retransmission, a new first unicast transmission, and a unicast retransmission.

12. The wireless communication method of claim 11, wherein:
the downlink control signal includes a physical downlink control channel, PDCCH, and the downlink data signal includes a physical downlink shared channel, PDSCH; or
the downlink control signal belongs to a first resource set such that the downlink data signal is a new multicast transmission.

13. The wireless communication method of claim 11, further comprising:
scrambling, by the wireless communication node, the downlink control signal with a first radio network temporary identifier, RNTI, wherein the downlink data signal is a new multicast transmission.

14. The wireless communication method of claim 11, wherein:
the downlink control signal belongs to a fourth resource set that is associated with a fourth CORESET or a fourth search space; or
the downlink control signal and the downlink data signal can only be identified by the wireless communication device.

15. A wireless communication node, comprising:
at least one processor configured to:
transmit, via a transmitter to a wireless communication device, a downlink control signal, wherein the downlink control signal belongs to a resource set of a plurality of resource sets, wherein each of the plurality of resource sets is associated with a respective control resource set, CORESET; and
transmit, via a transmitter to the wireless communication device, a downlink data signal scheduled by the downlink control signal, wherein, based on the resource set to which the downlink control signal belongs, the downlink data signal is one of: a new first multicast transmission, a multicast retransmission, a new first unicast transmission, and a unicast retransmission.

## Patentansprüche

1. Verfahren zur drahtlosen Kommunikation, umfassend:
Empfangen (1602) eines Downlink-Steuersignals durch eine Vorrichtung zur drahtlosen Kommunikation von einem Knoten zur drahtlosen Kommunikation;
Bestimmen (1604), durch die Vorrichtung zur drahtlosen Kommunikation als Reaktion auf das Empfangen des Downlink-Steuersignals, eines Ressourcensatzes aus einer Vielzahl von Ressourcensätzen, zu dem das Downlink-Steuersignal gehört, wobei jeder der Vielzahl von Ressourcensätzen einem jeweiligen Steuerressourcensatz, CORESET, zugeordnet ist;
Empfangen (1606), durch die Vorrichtung zur drahtlosen Kommunikation, eines durch das Downlink-Steuersignal geplanten Downlink-Datensignals; und
Bestimmen (1608), durch die Vorrichtung zur drahtlosen Kommunikation basierend auf dem bestimmten Ressourcensatz, dass das Downlink-Datensignal eines ist von: einer neuen ersten Multicast-Übertragung, einer Multicast-Neuübertragung, einer neuen ersten Unicast-Übertragung und einer Unicast-Neuübertragung.

2. Verfahren zur drahtlosen Kommunikation nach Anspruch 1, wobei das Downlink-Steuersignal einen physikalischenDownlink-Steuerkanal, PDCCH, umfasst und das Downlink-Datensignal einen physikalischengemeinsamen Downlink-Kanal, PDSCH, umfasst.

3. Verfahren zur drahtlosen Kommunikation nach Anspruch 1, ferner umfassend:
Bestimmen, durch die Vorrichtung zur drahtlosen Kommunikation, dass das Downlink-Steuersignal zu einem ersten Ressourcensatz gehört; und
Bestimmen, durch die Vorrichtung zur drahtlosen Kommunikation, dass das Downlink-Datensignal eine neue Multicast-Übertragung ist.

4. Verfahren zur drahtlosen Kommunikation nach Anspruch 3, wobei:
ein Indikator neuer Daten, NDI, im Downlink-Steuersignal als fester Wert festgelegt ist; oder
der erste Ressourcensatz einem ersten CORESET oder einem ersten Suchraum zugeordnet ist, oder
der erste Ressourcensatz einen ersten Teil von Kandidaten eines physikalischen Downlink-Steuerkanals, PDCCH, in einem dritten CORESET oder einem dritten Suchraum umfasst, wobei der erste Teil von PDCCH-Kandidaten mindestens einem entspricht von: i) einem oder mehreren einer Vielzahl von PDCCH-Überwachungsereignissen, PDCCH-MOs, im dritten CORESET oder im dritten Suchraum; ii) einem oder mehreren PDCCH-Kandidaten im dritten CORESET oder im dritten Suchraum mit einem Kandidatenindex, der größer oder kleiner als ein Schwellenwert ist, oder iii) einem oder mehreren PDCCH-Kandidaten im dritten CORESET oder im dritten Suchraum mit einem Steuerkanalelement-Index, CCE-Index, der größer oder kleiner als ein Schwellenwert ist; oder
der erste CORESET oder der erste Suchraum durch eine Signalisierung konfiguriert wird, die durch den Knoten zur drahtlosen Kommunikation rundgesendet oder per Multicast gesendet wird.

5. Verfahren zur drahtlosen Kommunikation nach Anspruch 4, wobei:
die rundgesendete Signalisierung in mindestens einem eingeschlossen ist von: einem Master-Informationsblock, MIB, oder einem System-Informationsblock, SIB; oder
die per Multicast gesendete Signalisierung eingeschlossen ist in mindestens einem von: einem Multicast-Steuerkanal, MCCH, einem Multicast-Verkehrskanal, MTCH, einem Einzelzellen-Multicast-Steuerkanal, SC-MCCH, einem Einzelzellen-Multicast-Verkehrskanal, SC-MTCH, einem Multimedia-Rundsende-Multicast-Dienst, MBMS, Punkt zu Multipunkt Funkträger, MRB, oder einem Einzelzellen-MRB, SC-MRB.

6. Verfahren zur drahtlosen Kommunikation nach Anspruch 1, ferner umfassend:
Bestimmen, durch die Vorrichtung zur drahtlosen Kommunikation, dass das Downlink-Steuersignal mit einer ersten temporären Funknetzkennung, RNTI, verschlüsselt ist; und
Bestimmen, durch die Vorrichtung zur drahtlosen Kommunikation, dass das Downlink-Datensignal eine neue Multicast-Übertragung ist;
oder
Bestimmen, durch die Vorrichtung zur drahtlosen Kommunikation, dass das Downlink-Steuersignal zu einem zweiten Ressourcensatz gehört; und
Bestimmen, durch die Vorrichtung zur drahtlosen Kommunikation, dass das Downlink-Datensignal eine Multicast-Neuübertragung ist.

7. Verfahren zur drahtlosen Kommunikation nach Anspruch 6, wobei:
ein Indikator neuer Daten, NDI, im Downlink-Steuersignal als ein fester Wert festgelegt ist; oder
der zweite Ressourcensatz einem zweiten CORESET oder einem zweiten Suchraum zugeordnet ist; oder
der zweite Ressourcensatz einen zweiten Teil von Kandidaten eines physikalischen Downlink-Steuerkanals, PDCCH, in einem dritten CORESET oder einem dritten Suchraum umfasst, wobei der zweite Teil von PDCCH-Kandidaten mindestens einem entspricht von: i) einem oder mehreren einer Vielzahl von PDCCH-Überwachungsereignissen, PDCCH-MOs, im dritten CORESET oder im dritten Suchraum; ii) einem oder mehreren PDCCH-Kandidaten im dritten CORESET oder im dritten Suchraum mit einem Kandidatenindex, der kleiner oder größer als ein Schwellenwert ist, oder iii) einem oder mehreren PDCCH-Kandidaten im dritten CORESET oder im dritten Suchraum mit einem CCE-Index, der kleiner oder größer als ein Schwellenwert ist.

8. Verfahren zur drahtlosen Kommunikation nach Anspruch 1, ferner umfassend:
Bestimmen, durch die Vorrichtung zur drahtlosen Kommunikation, dass das Downlink-Steuersignal zu einem vierten Ressourcensatz gehört, wobei der vierte Ressourcensatz einem vierten CORESET oder einem vierten Suchraum zugeordnet ist.

9. Verfahren zur drahtlosen Kommunikation nach Anspruch 8, ferner umfassend:
Bestimmen, durch die Vorrichtung zur drahtlosen Kommunikation, dass das Downlink-Datensignal eine Multicast-Neuübertragung ist, wenn ein Indikator neuer Daten, NDI, in dem Downlink-Steuersignal nicht umgeschaltet wird, im Vergleich zu einer ersten vorherigen Übertragung, die eine Multicast-Übertragung ist;
Bestimmen, durch die Vorrichtung zur drahtlosen Kommunikation, dass das Downlink-Datensignal eine neue Unicast-Übertragung ist, wenn der NDI in dem Downlink-Steuersignal umgeschaltet wird, im Vergleich zu der zweiten vorherigen Übertragung, die entweder eine Multicast-Übertragung oder eine Unicast-Übertragung ist; und
Bestimmen, durch die Vorrichtung zur drahtlosen Kommunikation, dass das Downlink-Datensignal eine Unicast-Neuübertragung ist, wenn der NDI in dem Downlink-Steuersignal nicht umgeschaltet wird, im Vergleich zu einer dritten vorherigen Übertragung, die eine Unicast-Übertragung ist.

10. Vorrichtung zur drahtlosen Kommunikation, umfassend:
mindestens einen Prozessor, der konfiguriert ist zum:
Empfangen, über einen Empfänger von einem Knoten zur drahtlosen Kommunikation, eines Downlink-Steuersignals;
Bestimmen, als Reaktion auf das Empfangen des Downlink-Steuersignals, eines Ressourcensatzes aus einer Vielzahl von Ressourcensätzen, zu dem das Downlink-Steuersignal gehört, wobei jeder der Vielzahl von Ressourcensätzen einem jeweiligen Steuerressourcensatz, CORESET, zugeordnet ist;
Empfangen, über den Empfänger, eines durch das Downlink-Steuersignal geplanten Downlink-Datensignals; und
Bestimmen, basierend auf dem bestimmten Ressourcensatz, dass das Downlink-Datensignal eines ist von: einer neuen ersten Multicast-Übertragung, einer Multicast-Neuübertragung, einer neuen ersten Unicast-Übertragung und einer Unicast-Neuübertragung.

11. Verfahren zur drahtlosen Kommunikation, umfassend:
Übertragen (1702), durch einen Knoten zur drahtlosen Kommunikation an eine Vorrichtung zur drahtlosen Kommunikation, eines Downlink-Steuersignals, wobei das Downlink-Steuersignal zu einem Ressourcensatz aus einer Vielzahl von Ressourcensätzen gehört, wobei jeder der Vielzahl von Ressourcensätzen einem jeweiligen Steuerressourcensatz, CORESET, zugeordnet ist; und
Übertragen (1704), durch den Knoten zur drahtlosen Kommunikation an die Vorrichtung zur drahtlosen Kommunikation, eines durch das Downlink-Steuersignal geplanten Downlink-Datensignals, wobei das Downlink-Datensignal basierend auf dem Ressourcensatz, zu dem das Downlink-Steuersignal gehört, eines ist von: einer neuen ersten Multicast-Übertragung, einer Multicast-Neuübertragung, einer neuen ersten Unicast-Übertragung und einer Unicast-Neuübertragung.

12. Verfahren zur drahtlosen Kommunikation nach Anspruch 11, wobei:
das Downlink-Steuersignal einen physikalischen Downlink-Steuerkanal, PDCCH, umfasst und das Downlink-Datensignal einen physikalischen gemeinsamen Downlink-Kanal, PDSCH, umfasst; oder
das Downlink-Steuersignal zu einem ersten Ressourcensatz gehört, sodass das Downlink-Datensignal eine neue Multicast-Übertragung ist.

13. Verfahren zur drahtlosen Kommunikation nach Anspruch 11, ferner umfassend:
Verschlüsseln, durch den Knoten zur drahtlosen Kommunikation, des Downlink-Steuersignals mit einer ersten temporären Funknetzkennung, RNTI, wobei das Downlink-Datensignal eine neue Multicast-Übertragung ist.

14. Verfahren zur drahtlosen Kommunikation nach Anspruch 11, wobei:
das Downlink-Steuersignal zu einem vierten Ressourcensatz gehört, der einem vierten CORESET oder einem vierten Suchraum zugeordnet ist; oder
das Downlink-Steuersignal und das Downlink-Datensignal nur durch die Vorrichtung zur drahtlosen Kommunikation identifiziert werden können.

15. Knoten zur drahtlosen Kommunikation, umfassend:
mindestens einen Prozessor, der konfiguriert ist zum:
Übertragen, über einen Sender an eine Vorrichtung zur drahtlosen Kommunikation, eines Downlink-Steuersignals, wobei das Downlink-Steuersignal zu einem Ressourcensatz einer Vielzahl von Ressourcensätzen gehört, wobei jeder der Vielzahl von Ressourcensätzen einem jeweiligen Steuerressourcensatz, CORESET, zugeordnet ist; und
Übertragen, über einen Sender an die Vorrichtung zur drahtlosen Kommunikation, eines durch das Downlink-Steuersignal geplanten Downlink-Datensignals, wobei das Downlink-Datensignal basierend auf dem Ressourcensatz, zu dem das Downlink-Steuersignal gehört, eines ist von: einer neuen ersten Multicast-Übertragung, einer Multicast-Neuübertragung, einer neuen ersten Unicast-Übertragung und einer Unicast-Neuübertragung.

## Revendications

1. Procédé de communication sans fil, comprenant :
la réception (1602), par un dispositif de communication sans fil à partir d'un nœud de communication sans fil, un signal de commande de liaison descendante ;
la détermination (1604), par le dispositif de communication sans fil en réponse à la réception du signal de commande de liaison descendante, d'un ensemble de ressources parmi une pluralité d'ensembles de ressources, auquel appartient le signal de commande de liaison descendante, dans lequel chacun parmi la pluralité d'ensembles de ressources est associé à un ensemble de ressources de commande, CORESET, respectif ;
la réception (1606), par le dispositif de communication sans fil, d'un signal de données de liaison descendante programmé par le signal de commande de liaison descendante ; et
le fait de déterminer (1608), par le dispositif de communication sans fil sur la base de l'ensemble de ressources déterminé, que le signal de données de liaison descendante est l'une parmi : une nouvelle première transmission multidiffusion, une retransmission multidiffusion, une nouvelle première transmission monodiffusion et une retransmission monodiffusion.

2. Procédé de communication sans fil selon la revendication 1, dans lequel le signal de commande de liaison descendante comporte un canal physique de commande de liaison descendante, PDCCH, et le signal de données de liaison descendante comporte un canal physique partagé de liaison descendante, PDSCH.

3. Procédé de communication sans fil selon la revendication 1, comprenant en outre :
le fait de déterminer, par le dispositif de communication sans fil, que le signal de commande de liaison descendante appartient à un premier ensemble de ressources ; et
le fait de déterminer, par le dispositif de communication sans fil, que le signal de données de liaison descendante est une nouvelle transmission multidiffusion.

4. Procédé de communication sans fil selon la revendication 3, dans lequel :
un indicateur de nouvelles données, NDI, dans le signal de commande de liaison descendante est défini comme une valeur fixe ; ou
le premier ensemble de ressources est associé à un premier CORESET ou à un premier espace de recherche, ou
le premier ensemble de ressources comporte une première partie de candidats de canal de commande de liaison descendante physique, PDCCH, dans un troisième CORESET ou un troisième espace de recherche, dans lequel la première partie de candidats de PDCCH correspond à au moins l'un parmi : i) une ou plusieurs occasions de surveillance parmi une pluralité d'occasions de surveillance, MO, de PDCCH dans le troisième CORESET ou le troisième espace de recherche ; ii) un ou plusieurs candidats de PDCCH dans le troisième CORESET ou le troisième espace de recherche avec un indice de candidat supérieur ou inférieur à un seuil ou iii) un ou plusieurs candidats de PDCCH dans le troisième CORESET ou le troisième espace de recherche avec un indice d'élément de canal de commande, CCE, supérieur ou inférieur à un seuil ; ou le premier CORESET ou le premier espace de recherche est configuré par une signalisation qui est diffusée ou multidiffusée par le nœud de communication sans fil.

5. Procédé de communication sans fil selon la revendication 4, dans lequel :
la signalisation diffusée est incluse dans au moins l'un parmi : un bloc d'informations principal, MIB, ou un bloc d'informations système, SIB ; ou
la signalisation multidiffusée est incluse dans au moins l'un parmi : un canal de commande multidiffusion, MCCH, un canal de trafic multidiffusion, MTCH, un canal de commande de multidiffusion à cellule unique, SC-MCCH, un canal de trafic multidiffusion à cellule unique, SC-MTCH, un service de multidiffusion multimédia, MBMS, un support radio point à multipoint, MRB, ou un MRB à cellule unique, SC-MRB.

6. Procédé de communication sans fil selon la revendication 1, comprenant en outre :
le fait de déterminer, par le dispositif de communication sans fil, que le signal de commande de liaison descendante est brouillé avec un premier identificateur temporaire de réseau radio, RNTI ; et
le fait de déterminer, par le dispositif de communication sans fil, que le signal de données de liaison descendante est une nouvelle transmission multidiffusion ;
ou
le fait de déterminer, par le dispositif de communication sans fil, que le signal de commande de liaison descendante appartient à un deuxième ensemble de ressources ; et
le fait de déterminer, par le dispositif de communication sans fil, que le signal de données de liaison descendante est une retransmission multidiffusion.

7. Procédé de communication sans fil selon la revendication 6, dans lequel :
un indicateur de nouvelles données, NDI, dans le signal de commande de liaison descendante est défini comme une valeur fixe ; ou
le deuxième ensemble de ressources est associé à un deuxième CORESET ou à un deuxième espace de recherche ; ou
le deuxième ensemble de ressources comporte une seconde partie de candidats de canal physique de commande de liaison descendante, PDCCH, dans un troisième CORESET ou un troisième espace de recherche, dans lequel la seconde partie de candidats de PDCCH correspond à au moins l'un parmi : i) une ou plusieurs occasions de surveillance parmi une pluralité d'occasions de surveillance, MO, de PDCCH dans le troisième CORESET ou le troisième espace de recherche ; ii) un ou plusieurs candidats de PDCCH dans le troisième CORESET ou le troisième espace de recherche avec un indice de candidat inférieur ou supérieur à un seuil, ou iii) un ou plusieurs candidats de PDCCH dans le troisième CORESET ou le troisième espace de recherche avec un indice CCE inférieur ou supérieur à un seuil.

8. Procédé de communication sans fil selon la revendication 1, comprenant en outre :
le fait de déterminer, par le dispositif de communication sans fil, que le signal de commande de liaison descendante appartient à un quatrième ensemble de ressources, dans lequel le quatrième ensemble de ressources est associé à un quatrième CORESET ou à un quatrième espace de recherche.

9. Procédé de communication sans fil selon la revendication 8, comprenant en outre :
le fait de déterminer, par le dispositif de communication sans fil, que le signal de données de liaison descendante est une retransmission multidiffusion lorsqu'un indicateur de nouvelles données, NDI, dans le signal de commande de liaison descendante n'est pas basculé, par rapport à une première transmission précédente qui est une transmission multidiffusion ;
le fait de déterminer, par le dispositif de communication sans fil, que le signal de données de liaison descendante est une nouvelle transmission unidirectionnelle lorsque le NDI dans le signal de commande de la liaison descendante est basculé, par rapport à la deuxième transmission précédente qui est soit une transmission multidiffusion, soit une transmission monodiffusion ; et
le fait de déterminer, par le dispositif de communication sans fil, que le signal de données de liaison descendante est une retransmission monodiffusion lorsque le NDI dans le signal de commande de liaison descendante n'est pas basculé, par rapport à une troisième transmission précédente qui est une transmission monodiffusion.

10. Dispositif de communication sans fil, comprenant :
au moins un processeur configuré pour :
recevoir, par l'intermédiaire d'un récepteur à partir d'un nœud de communication sans fil, un signal de commande de liaison descendante ;
déterminer, en réponse à la réception du signal de commande de liaison descendante, un ensemble de ressources parmi une pluralité d'ensembles de ressources, auquel appartient le signal de commande de liaison descendante, dans lequel chacun pami la pluralité d'ensembles de ressources est associé à un ensemble de ressources de commande, CORESET, respectif ;
recevoir, par l'intermédiaire du récepteur, un signal de données de liaison descendante programmé par le signal de commande de liaison descendante ; et
déterminer, sur la base de l'ensemble de ressources déterminé, que le signal de données de liaison descendante est l'une parmi : une nouvelle première transmission multidiffusion, une retransmission multidiffusion, une nouvelle première transmission monodiffusion et une retransmission monodiffusion.

11. Procédé de communication sans fil, comprenant :
la transmission (1702),
par un nœud de communication sans fil à un dispositif de communication sans fil, d'un signal de commande de liaison descendante, dans lequel le signal de commande de liaison descendante appartient à un ensemble de ressources d'une pluralité d'ensembles de ressources, dans lequel chacun parmi la pluralité d'ensembles de ressources est associé à un ensemble de ressources de commande, CORESET, respectif ; et
la transmission (1704),
par le nœud de communication sans fil au dispositif de communication sans fil, d'un signal de données de liaison descendante programmé par le signal de commande de liaison descendante, dans lequel, sur la base de l'ensemble de ressources auquel appartient le signal de commande de liaison descendante, le signal de données de liaison descendante est l'une parmi : une nouvelle première transmission multidiffusion, une retransmission multidiffusion, une nouvelle première transmission monodiffusion et une retransmission monodiffusion.

12. Procédé de communication sans fil selon la revendication 11, dans lequel :
le signal de commande de liaison descendante comporte un canal physique de commande de liaison descendante, PDCCH, et le signal de données de liaison descendante comporte un canal physique partagé de liaison descendante, PDSCH ; ou
le signal de commande de liaison descendante appartient à un premier ensemble de ressources de sorte que le signal de données de liaison descendante est une nouvelle transmission multidiffusion.

13. Procédé de communication sans fil selon la revendication 11, comprenant en outre :
le brouillage, par le nœud de communication sans fil, du signal de commande de liaison descendante avec un premier identificateur temporaire de réseau radio, RNTI,
dans lequel le signal de données de liaison descendante est une nouvelle transmission multidiffusion.

14. Procédé de communication sans fil selon la revendication 11, dans lequel :
le signal de commande de liaison descendante appartient à un quatrième ensemble de ressources qui est associé à un quatrième CORESET ou à un quatrième espace de recherche ; ou
le signal de commande de liaison descendante et le signal de données de liaison descendante ne peuvent être identifiés que par le dispositif de communication sans fil.

15. Nœud de communication sans fil, comprenant :
au moins un processeur configuré pour :
transmettre, par l'intermédiaire d'un émetteur à un dispositif de communication sans fil, un signal de commande de liaison descendante, dans lequel le signal de commande de liaison descendante appartient à un ensemble de ressources d'une pluralité d'ensembles de ressources, dans lequel chacun parmi la pluralité d'ensembles de ressources est associé à un ensemble de ressources de commande, CORESET, respectif ; et
transmettre, par l'intermédiaire d'un émetteur au dispositif de communication sans fil, un signal de données de liaison descendante programmé par le signal de commande de liaison descendante, dans lequel, en fonction de l'ensemble de ressources auquel appartient le signal de commande de liaison descendante, le signal de données de liaison descendante est l'une parmi : une nouvelle première transmission multidiffusion, une retransmission multidiffusion, une nouvelle première transmission monodiffusion, et une retransmission monodiffusion.
